(19) Europäisches Patentamt / European Patent Office / Office européen des brevets

(11) **EP 4 243 530 A1**

## (12) EUROPEAN PATENT APPLICATION
published in accordance with Art. 153(4) EPC

(43) Date of publication:
**13.09.2023 Bulletin 2023/37**

(21) Application number: **21900013.0**

(22) Date of filing: **30.11.2021**

(51) International Patent Classification (IPC):
**H04W 72/04** (2023.01)   **H04B 1/7136** (2011.01)

(52) Cooperative Patent Classification (CPC):
**H04B 1/7136; H04L 5/00; H04W 72/04; H04W 72/12**

(86) International application number:
**PCT/CN2021/134624**

(87) International publication number:
**WO 2022/116982 (09.06.2022 Gazette 2022/23)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **03.12.2020  CN 202011395788**
**15.01.2021  CN 202110055474**

(71) Applicant: **Huawei Technologies Co., Ltd.**
**Shenzhen, Guangdong 518129 (CN)**

(72) Inventor: **LIU, Yun**
**Shenzhen, Guangdong 518129 (CN)**

(74) Representative: **Gill Jennings & Every LLP**
**The Broadgate Tower**
**20 Primrose Street**
**London EC2A 2ES (GB)**

## (54) DATA TRANSMISSION METHOD AND APPARATUS

(57) This application provides a data transmission method and apparatus, and relates to the field of communication technologies. In the method, a terminal receives a slot format and PUSCH parameters from a network device; determines a first resource in a first slot based on the slot format and the PUSCH parameters, where the first resource is formed by available symbols; and determines, based on a quantity of the available symbols in the first resource, whether to send a PUSCH in a frequency hopping manner in the first resource, instead of directly sending the PUSCH in the frequency hopping manner in the first resource based on a configuration of the network device, so that resource utilization can be improved.

FIG. 8

## Description

This application claims priority to Patent Application No. 202011395788.2, filed with the China National Intellectual Property Administration on December 03, 2020 and entitled "PUSCH TYPE-A ENHANCEMENT SOLUTION AND METHOD", and claims priority to Patent Application No. 202110055474.6, filed with the China National Intellectual Property Administration on January 15, 2021 and entitled "DATA TRANSMISSION METHOD AND APPARATUS", which are incorporated herein by reference in their entireties.

## TECHNICAL FIELD

This application relates to the field of communication technologies, and in particular, to a data transmission method and apparatus.

## BACKGROUND

Currently, when sending a physical uplink shared channel (physical uplink shared channel, PUSCH), a terminal determines, based on a configuration of a network device, whether to send the PUSCH in a frequency hopping manner. When the network device configures that the PUSCH is sent in the frequency hopping manner, the terminal sends the PUSCH in the frequency hopping manner. This manner may reduce resource utilization.

## SUMMARY

Embodiments of this application provide a data transmission method and apparatus, to improve resource utilization.

According to a first aspect, a data transmission method is provided, including: receiving a slot format and PUSCH parameters from a network device; determining a first resource in a first slot based on the slot format and the PUSCH parameters; and determining, based on a quantity of the available symbols in the first resource, whether to send a PUSCH in a frequency hopping manner in the first resource, where the first resource is formed by available symbols. In the method provided in the first aspect, a terminal may determine, based on the quantity of the available symbols in the first resource, whether to send the PUSCH in the frequency hopping manner in the first resource, instead of directly sending the PUSCH in the frequency hopping manner in the first resource based on a configuration of the network device, so that resource utilization can be improved.

In a possible implementation, the first resource does not include a downlink symbol or a flexible symbol for downlink-to-uplink conversion. In this possible implementation, it can be ensured that all symbols in the first resource can be for transmitting the PUSCH.

In a possible implementation, the determining, based on a quantity of the available symbols in the first resource, whether to send a PUSCH in a frequency hopping manner in the first resource includes: sending the PUSCH in the frequency hopping manner in the first resource when the quantity of the available symbols in the first resource is greater than or equal to a first threshold; and sending the PUSCH in a non-frequency hopping manner in the first resource when the quantity of the available symbols in the first resource is less than a second threshold, where the second threshold is less than or equal to the first threshold. In this possible implementation, the terminal may send the PUSCH in the frequency hopping manner when the quantity of the symbols is large, or send the PUSCH in a non-frequency hopping manner when the quantity of the symbols is small, thereby improving the resource utilization.

In a possible implementation, sending the PUSCH in the frequency hopping manner is configured in the PUSCH parameters. In this possible implementation, even if the network device configures that the PUSCH is sent in the frequency hopping manner, the terminal still determines, based on the quantity of the available symbols in the first resource, whether to send the PUSCH in the frequency hopping manner in the first resource, thereby avoiding a waste of resources.

In a possible implementation, the PUSCH parameters indicate a quantity of symbols of the PUSCH and/or a quantity of symbols occupied by a DMRS, and the first threshold and/or the second threshold are/is related to the quantity of the symbols of the PUSCH and/or the quantity of the symbols occupied by the DMRS. In this possible implementation, the first threshold and/or the second threshold may be properly determined based on the quantity of symbols of the PUSCH and/or the quantity of symbols occupied by the DMRS.

In a possible implementation, the method further includes: receiving first indication information, where the first indication information indicates a DMRS position in the first resource; and the DMRS position is one or more symbols in a first available symbol to a fourth available symbol in the first resource, or the DMRS position is a third last symbol and/or a fourth last symbol in the first resource. In this possible implementation, a problem of how to send the DMRS when sending the PUSCH in the manner in this application can be resolved. In addition, a problem of how to send the DMRS in a special slot can be further resolved.

In a possible implementation, the first slot is a special slot, and the PUSCH parameters indicate a start symbol and/or a symbol quantity corresponding to the special slot. In this possible implementation, a problem of indicating the start symbol and/or the symbol quantity corresponding to the special slot can be resolved.

In a possible implementation, the first slot is one of the N slots, and the N slots are for sending the PUSCH or for repeatedly sending the PUSCH; and the N slots are N consecutive slots that start from a start slot, or the N slots are N slots that start from a start slot and do not include a downlink slot, or the N slots are N slots that start from a start slot and do not include a downlink slot or a special slot, or the N slots are N uplink slots that start from a start slot, or the N slots are N slots that start from a start slot and satisfy that symbols starting from a start symbol S in each slot are all available symbols, or the N slots are N slots that start from a start slot and satisfy that L symbols starting from a start symbol S in each slot are all available symbols, where the start slot is a first slot for sending the PUSCH or for repeatedly sending the PUSCH, and N is an integer greater than 1. In this possible implementation, a plurality of possible implementations of this solution are provided, so that this solution can be flexibly applied to various scenarios.

According to a second aspect, a data transmission method is provided, including: receiving a slot format and PUSCH parameters from a network device; determining N slots based on the PUSCH parameters; and determining, based on slot formats of the N slots, whether to send data carried on a PUSCH in the N slots. The data sent in the N slots is obtained by performing channel coding on a TB, a TB size is determined based on available symbols in the N slots, and N is an integer greater than 1. In the method provided in the second aspect, a terminal determines the N slots based on the PUSCH parameters, and determines, based on the slot formats of the N slots, whether to send the data carried on the PUSCH in the N slots. In this way, when the data carried on the PUSCH can be sent in the N slots, the PUSCH is sent in the N slots, to carry one TB over a plurality of slots.

In a possible implementation, the determining, based on slot formats of the N slots, whether to send data carried on a PUSCH in the N slots includes: sending the data in the N slots when a start symbol of each slot in the N slots and symbols after the start symbol of each slot are all available symbols. In this possible implementation, it can be ensured that there are available symbols in the N slots for sending the data.

In a possible implementation, the determining, based on slot formats of the N slots, whether to send data carried on a PUSCH in the N slots includes: sending the data in the N slots when symbols starting from a start symbol in a start slot in the N slots are all available symbols and symbols in other slots in the N slots are all available symbols. In this possible implementation, it can be ensured that there are available symbols in the N slots for sending the data.

In a possible implementation, the determining, based on slot formats of the N slots, whether to send data carried on a PUSCH in the N slots includes: sending, when symbols starting from a start symbol in a start slot in the N slots are all available symbols, the data in the start slot; and sending, when symbols in an $i^{th}$ slot in the N slots are all available symbols, the data in the $i^{th}$ slot, where a value of i is 2, ..., or N. In this possible implementation, it can be ensured that there are available symbols in the N slots for sending the data.

In a possible implementation, the determining, based on slot formats of the N slots, whether to send data carried on a PUSCH in the N slots includes: sending, when there are available symbols in an $i^{th}$ slot in the N slots, the data in the $i^{th}$ slot, where a value of i is 1, 2, ..., or N. In this possible implementation, it can be ensured that there are available symbols in the N slots for sending the data.

In a possible implementation, the determining, based on slot formats of the N slots, whether to send data carried on a PUSCH in the N slots includes: sending, when a quantity of available symbols in an $i^{th}$ slot in the N slots is greater than or equal to a third threshold, the data in the $i^{th}$ slot, where a value of i is 1, 2, ..., or N. In this possible implementation, it can be ensured that there are available symbols in the N slots for sending the data.

In a possible implementation, a value of N is indicated by the PUSCH parameters, or the value of N is determined based on a symbol quantity L1 indicated by the PUSCH parameters. In this possible implementation, a problem of how to determine a plurality of slots spanned by one TB is resolved.

In a possible implementation, the N slots are N consecutive slots that start from a start slot, or the N slots are N slots that start from a start slot and do not include a downlink slot, or the N slots are N slots that start from a start slot and do not include a downlink slot or a special slot, or the N slots are N uplink slots that start from a start slot, or the N slots are N slots that start from a start slot and satisfy that symbols starting from a start symbol S in each slot are all available symbols, or the N slots are N slots that start from a start slot and satisfy that L symbols starting from a start symbol S in each slot are all available symbols, or the N slots are N slots that satisfy that L symbols starting from a start symbol S in a start slot are all available symbols and symbols in other slots in the N slots are all available symbols, or the N slots are N slots that satisfy that symbols starting from a start symbol S in a start slot are all available symbols and symbols in other slots in the N slots are all available symbols, where the start slot is a first slot for sending the data carried on the PUSCH. In this possible implementation, a plurality of possible implementations of this solution are provided, so that this solution can be flexibly applied to various scenarios.

In a possible implementation, a first slot after the N slots is a start slot for repeatedly sending the data; or a first slot in which there are available symbols after the N slots is a start slot for repeatedly sending the data; or a first slot in which a symbol quantity of included available symbols is greater than or equal to a fourth threshold after the N slots is a start slot for repeatedly sending the data; or a first slot in which L symbols starting from a start symbol are all available symbols after the N slots is a start slot for repeatedly sending the data. In this possible implementation, a problem of how to determine the start slot for repeatedly sending the data in a scenario of carrying one TB over a plurality of slots is resolved.

In a possible implementation, the available symbols are not downlink symbols or flexible symbols for downlink-to-uplink conversion. In this possible implementation, it can be ensured that the available symbols can be for transmitting the PUSCH.

In a possible implementation, whether to send the data in the frequency hopping manner in each slot in the N slots is determined based on a quantity of available symbols in the slot. In this possible implementation, whether to send the PUSCH in the frequency hopping manner in a slot may be determined based on a quantity of available symbols in the slot, so that resource utilization can be improved.

In a possible implementation, a frequency domain position corresponding to slots in a first time window in the N slots is a first frequency domain position, and a frequency domain position corresponding to slots in a second time window is a second frequency domain position. In this possible implementation, inter-slot frequency hopping is measured in time windows, so that channel detection performance can be improved.

According to a third aspect, a data transmission method is provided, including: determining a first resource in a first slot based on a slot format and PUSCH parameters; and determining, based on a quantity of available symbols in the first resource, whether to receive a PUSCH in a frequency hopping manner in the first resource, where the first resource is formed by the available symbols. In the method provided in the third aspect, a network device may determine, based on the quantity of the available symbols in the first resource, whether to receive the PUSCH in the frequency hopping manner in the first resource, so that resource utilization can be improved.

In a possible implementation, the first resource does not include a downlink symbol or a flexible symbol for downlink-to-uplink conversion. In this possible implementation, it can be ensured that all symbols in the first resource can be for transmitting the PUSCH.

In a possible implementation, the determining, based on a quantity of available symbols in the first resource, whether to receive a PUSCH in a frequency hopping manner in the first resource includes: receiving the PUSCH in the frequency hopping manner in the first resource when the quantity of the available symbols in the first resource is greater than or equal to a first threshold; and receiving the PUSCH in a non-frequency hopping manner in the first resource when the quantity of the available symbols in the first resource is less than a second threshold, where the second threshold is less than or equal to the first threshold. In this possible implementation, the network device may receive the PUSCH in the frequency hopping manner when the quantity of the symbols is large, or receive the PUSCH in a non-frequency hopping manner when the quantity of the symbols is small, thereby improving the resource utilization.

In a possible implementation, the method further includes: sending first indication information, where the first indication information indicates a DMRS position in the first resource; and the DMRS position is one or more symbols in a first available symbol to a fourth available symbol in the first resource, or the DMRS position is a third last symbol and/or a fourth last symbol in the first resource. In this possible implementation, a problem of how to send a DMRS when sending the PUSCH in the manner in this application can be resolved. In addition, a problem of how to send the DMRS in a special slot can be further resolved.

In a possible implementation, the first slot is a special slot, and the PUSCH parameters indicate a start symbol and/or a symbol quantity corresponding to the special slot. In this possible implementation, a problem of indicating the start symbol and/or the symbol quantity corresponding to the special slot can be resolved.

In a possible implementation, the first slot is one of the N slots, and the N slots are for receiving the PUSCH or for receiving repetitions of the PUSCH; and the N slots are N consecutive slots that start from a start slot, or the N slots are N slots that start from a start slot and do not include a downlink slot, or the N slots are N slots that start from a start slot and do not include a downlink slot or a special slot, or the N slots are N uplink slots that start from a start slot, or the N slots are N slots that start from a start slot and satisfy that symbols starting from a start symbol S in each slot are all available symbols, or the N slots are N slots that start from a start slot and satisfy that L symbols starting from a start symbol S in each slot are all available symbols, where the start slot is a first slot for receiving the PUSCH or for receiving the repetitions of the PUSCH, and N is an integer greater than 1. In this possible implementation, a plurality of possible implementations of this solution are provided, so that this solution can be flexibly applied to various scenarios.

According to a fourth aspect, a data transmission method is provided, including: determining N slots based on PUSCH parameters, where N is an integer greater than 1; and determining, based on slot formats of the N slots, whether to receive data carried on a PUSCH in the N slots, where the data sent in the N slots is obtained by performing channel coding on a TB, and a TB size is determined based on available symbols in the N slots. In the method provided in the fourth aspect, a network device determines the N slots based on the PUSCH parameters, and determines, based on the slot formats of the N slots, whether to receive the data carried on the PUSCH in the N slots. In this way, when the data carried on the PUSCH can be received in the N slots, the PUSCH is received in the N slots, to carry one TB over a plurality of slots.

In a possible implementation, the determining, based on slot formats of the N slots, whether to receive data carried on a PUSCH in the N slots includes: receiving the data in the N slots when a start symbol of each slot in the N slots and symbols after the start symbol of each slot are all available symbols. In this possible implementation, it can be ensured that there are available symbols in the N slots for receiving the data.

In a possible implementation, the determining, based on slot formats of the N slots, whether to receive data carried on a PUSCH in the N slots includes: receiving the data in the N slots when symbols starting from a start symbol in a start slot in the N slots are all available symbols and symbols in other slots in the N slots are all available symbols. In this possible implementation, it can be ensured that there are available symbols in the N slots for receiving the data.

In a possible implementation, the determining, based on slot formats of the N slots, whether to receive data carried on a PUSCH in the N slots includes: receiving, when symbols starting from a start symbol in a start slot in the N slots are all available symbols, the data in the start slot; and receiving, when symbols in an $i^{th}$ slot in the N slots are all available symbols, the data in the $i^{th}$ slot, where a value of i is 2, ..., or N. In this possible implementation, it can be ensured that there are available symbols in the N slots for receiving the data.

In a possible implementation, the determining, based on slot formats of the N slots, whether to receive data carried on a PUSCH in the N slots includes: receiving, when there are available symbols in an $i^{th}$ slot in the N slots, the data in the $i^{th}$ slot, where a value of i is 1, 2, ..., or N. In this possible implementation, it can be ensured that there are available symbols in the N slots for receiving the data.

In a possible implementation, the determining, based on slot formats of the N slots, whether to receive data carried on a PUSCH in the N slots includes: receiving, when a quantity of available symbols in an $i^{th}$ slot in the N slots is greater than or equal to a third threshold, the data in the $i^{th}$ slot, where a value of i is 1, 2, ..., or N. In this possible implementation, it can be ensured that there are available symbols in the N slots for receiving the data.

In a possible implementation, the N slots are N consecutive slots that start from a start slot, or the N slots are N slots that start from a start slot and do not include a downlink slot, or the N slots are N slots that start from a start slot and do not include a downlink slot or a special slot, or the N slots are N uplink slots that start from a start slot, or the N slots are N slots that start from a start slot and satisfy that symbols starting from a start symbol S in each slot are all available symbols, or the N slots are N slots that start from a start slot and satisfy that L symbols starting from a start symbol S in each slot are all available symbols, or the N slots are N slots that satisfy that L symbols starting from a start symbol S in a start slot are all available symbols and symbols in other slots in the N slots are all available symbols, or the N slots are N slots that satisfy that symbols starting from a start symbol S in a start slot are all available symbols and symbols in other slots in the N slots are all available symbols, where the start slot is a first slot for receiving the data carried on the PUSCH. In this possible implementation, a plurality of possible implementations of this solution are provided, so that this solution can be flexibly applied to various scenarios.

In a possible implementation, a first slot after the N slots is a start slot for receiving repetitions of the data; or a first slot in which there are available symbols after the N slots is a start slot for receiving repetitions of the data; or a first slot in which a symbol quantity of included available symbols is greater than or equal to a fourth threshold after the N slots is a start slot for receiving repetitions of the data; or a first slot in which L symbols starting from a start symbol are all available symbols after the N slots is a start slot for receiving repetitions of the data. In this possible implementation, a problem of how to determine the start slot for repeatedly sending the data in a scenario of carrying one TB over a plurality of slots is resolved.

In a possible implementation, the available symbols are not downlink symbols or flexible symbols for downlink-to-uplink conversion. In this possible implementation, it can be ensured that the available symbols can be for transmitting the PUSCH.

In a possible implementation, whether to receive the data in the frequency hopping manner in each slot in the N slots is determined based on a quantity of available symbols in the slot. In this possible implementation, whether to receive the PUSCH in the frequency hopping manner in a slot may be determined based on a quantity of available symbols in the slot, so that resource utilization can be improved.

In a possible implementation, a frequency domain position corresponding to slots in a first time window in the N slots is a first frequency domain position, and a frequency domain position corresponding to slots in a second time window is a second frequency domain position. In this possible implementation, inter-slot frequency hopping is measured in time windows, so that channel detection performance can be improved.

According to a fifth aspect, a data transmission apparatus is provided, including a communication unit and a processing unit. The communication unit is configured to receive a slot format and PUSCH parameters from a network device; the processing unit is configured to determine a first resource in a first slot based on the slot format and the PUSCH parameters, where the first resource is formed by available symbols; and the processing unit is further configured to determine, based on a quantity of the available symbols in the first resource, whether to send a PUSCH in a frequency hopping manner in the first resource.

In a possible implementation, the first resource does not include a downlink symbol or a flexible symbol for downlink-to-uplink conversion.

In a possible implementation, the processing unit is further configured to: send, through the communication unit, the PUSCH in the frequency hopping manner in the first resource when the quantity of the available symbols in the first resource is greater than or equal to a first threshold; and send, through the communication unit, the PUSCH in a non-frequency hopping manner in the first resource when the quantity of the available symbols in the first resource is less than a second threshold, where the second threshold is less than or equal to the first threshold.

In a possible implementation, sending the PUSCH in the frequency hopping manner is configured in the PUSCH parameters.

In a possible implementation, the PUSCH parameters indicate a quantity of symbols of the PUSCH and/or a quantity of symbols occupied by a DMRS, and the first threshold and/or the second threshold are/is related to the quantity of the symbols of the PUSCH and/or the quantity of the symbols occupied by the DMRS.

In a possible implementation, the communication unit is further configured to receive first indication information, where the first indication information indicates a DMRS position in the first resource; and the DMRS position is one or more symbols in a first available symbol to a fourth available symbol in the first resource, or the DMRS position is a third last symbol and/or a fourth last symbol in the first resource.

In a possible implementation, the first slot is a special slot, and the PUSCH parameters indicate a start symbol and/or a symbol quantity corresponding to the special slot.

In a possible implementation, the first slot is one of the N slots, and the N slots are for sending the PUSCH or for repeatedly sending the PUSCH; and the N slots are N consecutive slots that start from a start slot, or the N slots are N slots that start from a start slot and do not include a downlink slot, or the N slots are N slots that start from a start slot and do not include a downlink slot or a special slot, or the N slots are N uplink slots that start from a start slot, or the N slots are N slots that start from a start slot and satisfy that symbols starting from a start symbol S in each slot are all available symbols, or the N slots are N slots that start from a start slot and satisfy that L symbols starting from a start symbol S in each slot are all available symbols, where the start slot is a first slot for sending the PUSCH or for repeatedly sending the PUSCH, and N is an integer greater than 1.

According to a sixth aspect, a data transmission apparatus is provided, including a communication unit and a processing unit. The communication unit is configured to receive a slot format and PUSCH parameters from a network device; the processing unit is configured to determine N slots based on the PUSCH parameters, where N is an integer greater than 1; and the processing unit is further configured to determine, based on slot formats of the N slots, whether to send data carried on a PUSCH in the N slots, where the data sent in the N slots is obtained by performing channel coding on a TB, and a TB size is determined based on available symbols in the N slots.

In a possible implementation, the processing unit is further configured to: send, through the communication unit, the data in the N slots when a start symbol of each slot in the N slots and symbols after the start symbol of each slot are all available symbols.

In a possible implementation, the processing unit is further configured to: send, through the communication unit, the data in the N slots when symbols starting from a start symbol in a start slot in the N slots are all available symbols and symbols in other slots in the N slots are all available symbols.

In a possible implementation, the processing unit is further configured to: send, through the communication unit when symbols starting from a start symbol in a start slot in the N slots are all available symbols, the data in the start slot; and send, through the communication unit when symbols in an $i^{th}$ slot in the N slots are all available symbols, the data in the $i^{th}$ slot, where a value of i is 2, ..., or N.

In a possible implementation, the processing unit is further configured to: send, through the communication unit when there are available symbols in an $i^{th}$ slot in the N slots, the data in the $i^{th}$ slot, where a value of i is 1, 2, ..., or N.

In a possible implementation, the processing unit is further configured to: send, through the communication unit when a quantity of available symbols in an $i^{th}$ slot in the N slots is greater than or equal to a third threshold, the data in the $i^{th}$ slot, where a value of i is 1, 2, ..., or N.

In a possible implementation, a value of N is indicated by the PUSCH parameters, or the value of N is determined based on a symbol quantity L1 indicated by the PUSCH parameters.

In a possible implementation, the N slots are N consecutive slots that start from a start slot, or the N slots are N slots that start from a start slot and do not include a downlink slot, or the N slots are N slots that start from a start slot and do not include a downlink slot or a special slot, or the N slots are N uplink slots that start from a start slot, or the N slots are N slots that start from a start slot and satisfy that symbols starting from a start symbol S in each slot are all available symbols, or the N slots are N slots that start from a start slot and satisfy that L symbols starting from a start symbol S in each slot are all available symbols, or the N slots are N slots that satisfy that L symbols starting from a start symbol S in a start slot are all available symbols and symbols in other slots in the N slots are all available symbols, or the N slots are N slots that satisfy that symbols starting from a start symbol S in a start slot are all available symbols and symbols in other slots in the N slots are all available symbols, where the start slot is a first slot for sending the data carried on the PUSCH.

In a possible implementation, a first slot after the N slots is a start slot for repeatedly sending the data; or a first slot in which there are available symbols after the N slots is a start slot for repeatedly sending the data; or a first slot in which a symbol quantity of included available symbols is greater than or equal to a fourth threshold after the N slots is a start slot for repeatedly sending the data; or a first slot in which L symbols starting from a start symbol are all available symbols after the N slots is a start slot for repeatedly sending the data.

In a possible implementation, the available symbols are not downlink symbols or flexible symbols for downlink-to-uplink conversion.

In a possible implementation, whether to send the data in the frequency hopping manner in each slot in the N slots is determined based on a quantity of available symbols in the slot.

According to a seventh aspect, a data transmission apparatus is provided, including a processing unit. The processing unit is configured to determine a first resource in a first slot based on a slot format and PUSCH parameters, where the first resource is formed by available symbols; and the processing unit is further configured to determine, based on a quantity of the available symbols in the first resource, whether to receive the PUSCH in a frequency hopping manner in the first resource.

In a possible implementation, the first resource does not include a downlink symbol or a flexible symbol for downlink-to-uplink conversion.

In a possible implementation, the data transmission apparatus further includes a communication unit. The processing unit is further configured to: receive, through the communication unit, the PUSCH in the frequency hopping manner in the first resource when the quantity of the available symbols in the first resource is greater than or equal to a first threshold; and receive, through the communication unit, the PUSCH in a non-frequency hopping manner in the first resource when the quantity of the available symbols in the first resource is less than a second threshold, where the second threshold is less than or equal to the first threshold.

In a possible implementation, the apparatus further includes a communication unit. The communication unit is configured to send first indication information, where the first indication information indicates a DMRS position in the first resource; and the DMRS position is one or more symbols in a first available symbol to a fourth available symbol in the first resource, or the DMRS position is a third last symbol and/or a fourth last symbol in the first resource.

In a possible implementation, the first slot is a special slot, and the PUSCH parameters indicate a start symbol and/or a symbol quantity corresponding to the special slot.

In a possible implementation, the first slot is one of the N slots, and the N slots are for receiving the PUSCH or for receiving repetitions of the PUSCH; and the N slots are N consecutive slots that start from a start slot, or the N slots are N slots that start from a start slot and do not include a downlink slot, or the N slots are N slots that start from a start slot and do not include a downlink slot or a special slot, or the N slots are N uplink slots that start from a start slot, or the N slots are N slots that start from a start slot and satisfy that symbols starting from a start symbol S in each slot are all available symbols, or the N slots are N slots that start from a start slot and satisfy that L symbols starting from a start symbol S in each slot are all available symbols, where the start slot is a first slot for receiving the PUSCH or for receiving the repetitions of the PUSCH, and N is an integer greater than 1.

According to an eighth aspect, a data transmission apparatus is provided, including a processing unit. The processing unit is configured to determine N slots based on PUSCH parameters, where N is an integer greater than 1; and the processing unit is further configured to determine, based on slot formats of the N slots, whether to receive data carried on a PUSCH in the N slots, where the data sent in the N slots is obtained by performing channel coding on a TB, and a TB size is determined based on available symbols in the N slots.

In a possible implementation, the data transmission apparatus further includes a communication unit. The processing unit is further configured to: receive, through the communication unit, the data in the N slots when a start symbol of each slot in the N slots and symbols after the start symbol of each slot are all available symbols.

In a possible implementation, the data transmission apparatus further includes a communication unit. The processing unit is further configured to: receive, through the communication unit, the data in the N slots when symbols starting from a start symbol in a start slot in the N slots are all available symbols and symbols in other slots in the N slots are all available symbols.

In a possible implementation, the data transmission apparatus further includes a communication unit. The processing unit is further configured to: receive, through the communication unit when symbols starting from a start symbol in a start slot in the N slots are all available symbols, the data in the start slot; and receive, through the communication unit when symbols in an $i^{th}$ slot in the N slots are all available symbols, the data in the $i^{th}$ slot, where a value of i is 2, ..., or N.

In a possible implementation, the data transmission apparatus further includes a communication unit. The processing unit is further configured to: receive, through the communication unit when there are available symbols in an $i^{th}$ slot in the N slots, the data in the $i^{th}$ slot, where a value of i is 1, 2, ..., or N.

In a possible implementation, the data transmission apparatus further includes a communication unit. The processing unit is further configured to: receive, through the communication unit when a quantity of available symbols in an $i^{th}$ slot in the N slots is greater than or equal to a third threshold, the data in the $i^{th}$ slot, where a value of i is 1,2, ...,orN.

In a possible implementation, the N slots are N consecutive slots that start from a start slot, or the N slots are N slots that start from a start slot and do not include a downlink slot, or the N slots are N slots that start from a start slot and do not include a downlink slot or a special slot, or the N slots are N uplink slots that start from a start slot, or the N slots are N slots that start from a start slot and satisfy that symbols starting from a start symbol S in each slot are all available symbols, or the N slots are N slots that start from a start slot and satisfy that L symbols starting from a start symbol S in each slot are all available symbols, or the N slots are N slots that satisfy that L symbols starting from a start symbol S in a start slot are all available symbols and symbols in other slots in the N slots are all available symbols, or the N slots are N slots that satisfy that symbols starting from a start symbol S in a start slot are all available symbols and symbols in other slots in the N slots are all available symbols, where the start slot is a first slot for receiving the data carried on the PUSCH.

In a possible implementation, a first slot after the N slots is a start slot for receiving repetitions of the data; or a first slot in which there are available symbols after the N slots is a start slot for receiving repetitions of the data; or a first slot in which a symbol quantity of included available symbols is greater than or equal to a fourth threshold after the N slots is a start slot for receiving repetitions of the data; or a first slot in which L symbols starting from a start symbol are all available symbols after the N slots is a start slot for receiving repetitions of the data.

In a possible implementation, the available symbols are not downlink symbols or flexible symbols for downlink-to-uplink conversion.

In a possible implementation, whether to receive the data in the frequency hopping manner in each slot in the N slots is determined based on a quantity of available symbols in the slot.

In a possible implementation, a frequency domain position corresponding to slots in a first time window in the N slots is a first frequency domain position, and a frequency domain position corresponding to slots in a second time window is a second frequency domain position.

According to a ninth aspect, a data transmission apparatus is provided, including a processor. The processor is connected to a memory, the memory is configured to store computer-executable instructions, and the processor executes the computer-executable instructions stored in the memory, to implement any method provided in any one of the first aspect to the fourth aspect. For example, the memory and the processor may be integrated, or may be independent components. In the latter case, the memory may be located inside the data transmission apparatus, or may be located outside the data transmission apparatus. When any method provided in the first aspect or the second aspect is performed, the data transmission apparatus may be, for example, a terminal or a chip located inside or outside the terminal. When any method provided in the third aspect or the fourth aspect is performed, the data transmission apparatus may be, for example, a network device or a chip located inside or outside the network device.

In a possible implementation, the processor includes a logic circuit, and further includes an input interface and/or an output interface. For example, the output interface is configured to perform a sending action in a corresponding method, and the input interface is configured to perform a receiving action in the corresponding method.

In a possible implementation, the data transmission apparatus further includes a communication interface and a communication bus, and the processor, the memory, and the communication interface are connected through the communication bus. The communication interface is configured to perform a sending and receiving action in a corresponding method. The communication interface may also be referred to as a transceiver. Optionally, the communication interface includes at least one of a transmitter and a receiver. In this case, the transmitter is configured to perform a sending action in a corresponding method, and the receiver is configured to perform a receiving action in the corresponding method.

In a possible implementation, the data transmission apparatus exists in a product form of a chip.

According to a tenth aspect, a chip is provided, including a processor and an interface. The processor is coupled to a memory through the interface, and when the processor executes computer-executable programs or computer-executable instructions in the memory, any method provided in any one of the first aspect to the fourth aspect is performed.

According to an eleventh aspect, a communication system is provided, including a data transmission apparatus configured to perform any method provided in the first aspect or the second aspect and a data transmission apparatus configured to perform any method provided in the third aspect or the fourth aspect.

According to a twelfth aspect, a computer-readable storage medium is provided, including computer-executable instructions. When the computer-executable instructions are run on a computer, the computer is enabled to perform any method provided in any one of the first aspect to the fourth aspect.

According to a thirteenth aspect, a computer program product including computer-executable instructions is provided. When the computer-executable instructions are run on a computer, the computer is enabled to perform any method provided in any one of the first aspect to the fourth aspect.

For technical effects brought by any implementation of the fifth aspect to the thirteenth aspect, refer to technical effects brought by corresponding implementations of the first aspect to the fourth aspect. Details are not described herein again.

It should be noted that the solutions in the foregoing aspects may be combined on the premise that the solutions are not contradictory.

**BRIEF DESCRIPTION OF DRAWINGS**

FIG. 1 is a schematic diagram of an actual repetition and a nominal repetition;
FIG. 2 is a schematic diagram of a frequency domain resource;
FIG. 3 is a schematic diagram of another frequency domain resource;
FIG. 4 is a schematic diagram of an RV sent on an actual repetition;
FIG. 5 is a schematic diagram of a communication scenario to which this application is applicable;
FIG. 6 is a schematic diagram of sending in a frequency hopping manner according to an embodiment of this application;
FIG. 7 is a schematic diagram of carrying one TB over a plurality of slots according to an embodiment of this application;
FIG. 8 is an interaction flowchart of a data transmission method according to an embodiment of this application;
FIG. 9 is a schematic diagram of available symbols in a slot according to an embodiment of this application;
FIG. 10 is a schematic diagram of a resource and an RV sent on the resource according to an embodiment of this application;
FIG. 11 is a schematic diagram of a resource according to an embodiment of this application;
FIG. 12 is a schematic diagram of another resource according to an embodiment of this application;
FIG. 13 is an interaction flowchart of another data transmission method according to an embodiment of this application;
FIG. 14 is a schematic diagram of repeatedly sending data according to an embodiment of this application;
FIG. 15 is an interaction flowchart of another data transmission method according to an embodiment of this application;
FIG. 16 is a schematic diagram of composition of a data transmission apparatus according to an embodiment of this application;
FIG. 17 is a schematic diagram of a hardware structure of a data transmission apparatus according to an embodiment of this application; and
FIG. 18 is a schematic diagram of a hardware structure of another data transmission apparatus according to an embodiment of this application.

**DESCRIPTION OF EMBODIMENTS**

In the description of this application, unless otherwise specified, "/" means or. For example, A/B may represent A or B. "And/Or" in this specification is merely an association relationship for describing associated objects, and indicates that three relationships may exist. For example, A and/or B may indicate that A exists alone, both A and B exist, and B exists alone. In the description of this application, unless otherwise specified, "at least one" means one or more, and "a plurality of" means two or more.

In addition, to clearly describe the technical solutions in embodiments of this application, terms such as first and second are used in embodiments of this application to distinguish between same items or similar items that provide basically same functions or purposes. A person skilled in the art may understand that the terms such as "first" and "second" do not limit a quantity or an execution sequence, and the terms such as "first" and "second" do not indicate a definite difference.

It should be noted that, in this application, terms such as "example" or "for example" are for representing giving an example, an illustration, or a description. Any embodiment or design solution described as an "example" or "for example" in this application should not be explained as being more preferred or having more advantages than another embodiment or design solution. Exactly, use of the term such as "example" or "for example" is intended to present a related concept in a specific manner.

To facilitate understanding of this application, some concepts and content in embodiments of this application are briefly described first.

1. Slot (slot)

In new radio (new radio, NR), for a normal (normal) cyclic prefix (cyclic prefix, CP), 1 slot includes 14 orthogonal frequency division multiplexing (orthogonal frequency division multiplexing, OFDM) symbols (referred to as symbols in the following). For an extended (extended) CP, 1 slot includes 12 symbols. For ease of description, an example in which one slot includes 14 symbols is used for description in this application. However, it is not limited to that one slot can include only 14 symbols.

In the slot, the 14 symbols are successively numbered in ascending order. A smallest number is 0, and a largest number is 13. In embodiments of this application, a symbol whose index (namely, number) is i is denoted as a symbol i, and one slot includes a symbol 0 to a symbol 13. In addition, in this application, a slot whose index (namely, number) is f is denoted as a slot f in the following. f is an integer greater than or equal to 0, and i is an integer greater than or equal to 0 and less than or equal to 13. In this application, an example in which both a slot and a symbol are numbered from 0 is used for description. During actual implementation, a slot and/or a symbol may alternatively be numbered from 1 or another number. This is not limited in this application.

One slot may be formed by one or more types of symbols. The types of symbols include: a symbol for downlink sending (denoted as a downlink symbol), a symbol for flexible transmission (denoted as a flexible symbol), a symbol for uplink sending (denoted as an uplink symbol), a guard interval symbol, and the like. A composition of a slot may be referred to as a slot format (slot format, SF).

Slots may be classified into uplink slots, downlink slots, and special slots. An uplink slot is a slot that includes only uplink symbols, a downlink slot is a slot that includes only downlink symbols, and a special slot is a slot that includes at least two of downlink symbols, uplink symbols, and flexible symbols.

2. Resource element (resource element, RE)

An RE is a smallest resource unit in physical resources. The RE occupies 1 symbol in time domain and occupies 1 subcarrier in frequency domain.

3. De-modulation reference signal (de-modulation reference signal, DMRS)

The DMRS is for demodulating a PUSCH. The DMRS is carried on some symbols of the PUSCH. The PUSCH includes the DMRS and data.

4. PUSCH mapping type (mapping type)

A PUSCH includes two mapping types: Type A and Type B. The mapping types may be understood as resource allocation types. In a communication standard of NR, both Type A and Type B indicate a start symbol (identified as S), a symbol length (identified as L), and a possible value range of S+L. For example, Table 6.1.2.1-1 (denoted as Table 1 in this application) in section 6.1.2.1 of 3rd generation partnership project (3rd generation partnership project, 3GPP) technology standard (Technology Standard, TS) 38.214 shows valid Sand L combinations (Valid S and L combinations) under Type A and Type B.

Table 1: **Valid S and L combinations**

| PUSCH mapping type | Normal cyclic prefix Extended cyclic prefix | | | | | |
| --- | --- | --- | --- | --- | --- | --- |
| | S | L | S+L | S | L | S+L |
| Type A | 0 | {4, ..., 14} | {4, ..., 14} | 0 | {4, ..., 12} | {4, ..., 12} |
| Type B | {0, ..., 13} | {1, ..., 14} | {1, ..., 14}, {1, ..., 27} | {0, ..., 11} | {1, ..., 12} | {1, ..., 12}, {1, ..., 23} |

Parameters in a Type A row are suitable for repeated sending of Type A only (repetition Type A only). "{1, ..., 14}" and "{1, ..., 12}" in S+L columns in a Type B row are suitable for repeated sending of Type A (for repetition Type A). "{1, ..., 27} and {1, ..., 23}" in the S+L columns in the Type B row are suitable for repeated sending of Type B (for repetition Type B).

Table 1 may be referred to as a time domain resource allocation (time domain resource assignment, TDRA) table.

5. Time domain resource allocation of a PUSCH

Currently, a network device may configure, through high layer signaling (for example, radio resource control (radio resource control, RRC) signaling), a default time domain resource allocation list (Time Domain Allocation List) of the PUSCH for a terminal, where the time domain resource allocation list includes a plurality of rows, one row is a combination of time domain resource allocation parameters, and each row corresponds to one row index. Each row includes the following parameter configurations: a PUSCH mapping type, $K_2$, and a start and length indicator value (start and length indicator value, SLIV).

The PUSCH mapping type is Type A or Type B. $K_2$ is for configuring an offset of a slot in which a PUSCH is compared with a slot in which downlink control information (downlink control information, DCI) for scheduling the PUSCH is. For example, if the slot in which the DCI for scheduling the PUSCH is is a slot n-$K_2$, a slot for sending the PUSCH is a slot n. The SLIV is for configuring a start symbol S and a symbol length L of the PUSCH, where S and L satisfy limitations in Table 1.

Specifically, the PUSCH needs to be scheduled through a physical downlink control channel (physical downlink control channel, PDCCH). A DCI format (DCI Format) 0-0 and a DCI format 0-1 are for scheduling the PUSCH. A time domain resource indicator field (Time domain resource allocation) field in the DCI corresponds to a row in the time domain resource allocation list. Time domain resources of the PUSCH are determined by using two parameters. A sending slot of the PUSCH is determined by using $K_2$, and a symbol position occupied by the PUSCH in the slot is determined by using S and L.

For example, the default time domain resource allocation list may be Table 2. $j$ is determined by using $\mu_{PUSCH}$. For a value of $\mu_{PUSCH}$, refer to Table 3. $\mu_{PUSCH}$ is related to a subcarrier spacing, and the subcarrier spacing is $15*2^\mu$ KHz (kilohertz). For a correspondence between j and $\mu_{PUSCH}$, refer to Table 3.

**Table 2**

| Row index | PUSCH mapping type | $K_2$ | S | L |
|---|---|---|---|---|
| 1 | Type A | $j$ | 0 | 14 |
| 2 | Type A | $j$ | 0 | 12 |
| 3 | Type A | $j$ | 0 | 10 |
| 4 | Type B | $j$ | 2 | 10 |
| 5 | Type B | $j$ | 4 | 10 |
| 6 | Type B | $j$ | 4 | 8 |
| 7 | Type B | $j$ | 4 | 6 |
| 8 | Type A | $j$+1 | 0 | 14 |
| 9 | Type A | $j$+1 | 0 | 12 |
| 10 | Type A | $j$+1 | 0 | 10 |
| 11 | Type A | $j$+2 | 0 | 14 |
| 12 | Type A | $j$+2 | 0 | 12 |
| 13 | Type A | $j$+2 | 0 | 10 |
| 14 | Type B | $j$ | 8 | 6 |
| 15 | Type A | $j$+3 | 0 | 14 |
| 16 | Type A | $j$+3 | 0 | 10 |

**Table 3**

| $\mu_{PUSCH}$ | j |
|---|---|
| 0 | 1 |
| 1 | 1 |
| 2 | 2 |
| 3 | 3 |

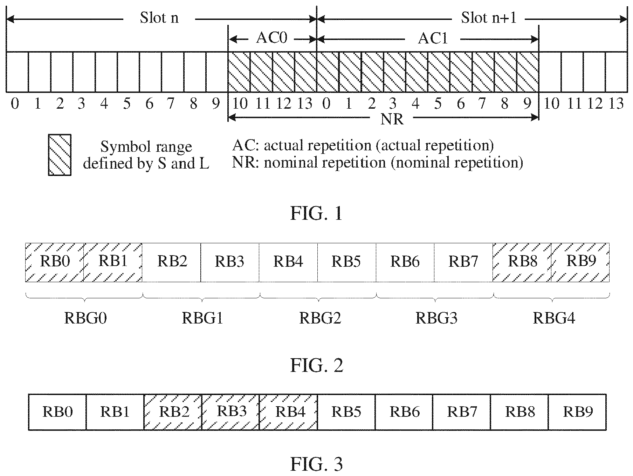

If S=10 and L=14, refer to FIG. 1. A sending position of the PUSCH starts from an eleventh symbol (namely, a start symbol 10) in a slot (assumed as the slot n) that first carries the PUSCH, and lasts for 14 symbols. Because a symbol quantity of one slot is 14, the continuous 14 symbols include last 4 symbols in the slot n and first 10 symbols in a slot n+1. In such a case of being over 2 slots, from the eleventh symbol in the slot n to a tenth symbol in next slot is denoted as a nominal repetition (nominal repetition), from the eleventh symbol in the slot n to a fourteenth symbol in the slot n is denoted as an actual repetition (actual repetition) (namely, an actual repetition 0), and from a first symbol in the slot n+1 to the tenth symbol in the slot n+1 is denoted as another actual repetition (namely, an actual repetition 1).

6. Frequency domain resource allocation of a PUSCH

Frequency domain resources of the PUSCH are indicated by using a frequency domain resource indicator field of a PDCCH. There are two indication methods for the frequency domain resources.

A first indication manner is type 0 (type 0). Frequency domain granularities of the indication method are resource block groups (resource block groups, RBGs). By using an example in which a bandwidth is 10 resource blocks (resource blocks, RBs) and an RBG size (namely, a quantity of RBs included in an RBG) is 2, as shown in FIG. 2, the 10 RBs may be divided into 5 groups, to obtain 5 RBGs. The frequency domain resources occupied by the PUSCH are indicated in a form of a bitmap (bitmap). By using an example in which indication information in the PDCCH is 10001, the PUSCH occupies an RBG0 and an RBG4.

A second indication manner is type 1 (type 1). In the indication manner, a start position (denoted as $RB_{start}$) and L' of RBs in frequency domain are indicated in the PDCCH, where L' indicates a length of the occupied RBs. By using an example in which a bandwidth is 10 RBs, refer to FIG. 3. If $RB_{start}$=2 and L'=3, the frequency domain resources occupied by the PUSCH are an RB2, an RB3, and an RB4.

7. Redundancy version (redundancy version, RV)

Data obtained after channel coding (turbocoder) is performed on a transport block (transport block, TB) includes three segments. A first segment may be considered as system bits (namely, information bits), and the remaining two segments are redundancy data. The three segments of the data are successively placed in a circular buffer. The RV actually indicates a position of the circular buffer from which data is fetched. Currently, the RV includes RVs whose indexes are 0, 2, 3, and 1, which may be denoted as an RV0, an RV2, an RV3, and an RV1 respectively. The RV0, the RV2, the RV3, and the RV1 each correspond to a start position for fetching data in the circular buffer. The RV0 includes a largest quantity of system bits, the RV1 and the RV3 include a second largest quantity of system bits, and the RV2 includes a smallest quantity of system bits.

ATB size (TB size, TBS), namely, a quantity of bits (bits) included in the TB, may be determined based on a quantity of REs for sending a PUSCH. The quantity of REs for sending the PUSCH may be determined based on information such as a quantity of symbols included in a nominal repetition, and a quantity of RBs for sending the PUSCH and a quantity of resources of a DMRS that are configured by a network device. For example, if the quantity of REs for sending the PUSCH is 396 and the TBS is 120 bits, and if the data obtained after channel coding is performed on the TB includes 360 bits, the 396 REs are for sending the 360 bits. If the quantity of REs for sending the PUSCH is greater than a quantity of bits in the coded data, any bit may not be carried on remaining resources.

The sending the PUSCH described in embodiments of this application may be understood as sending data carried on the PUSCH, and the data carried on the PUSCH is the data obtained after channel coding is performed on the TB.

A process of channel coding is complex to describe. Therefore, a simplified description is used when channel coding is described in this application. Specifically, in the following description of this application, if that channel coding is performed on a TB based on some available symbols is described, it means that a TBS is determined based on information such as a quantity of the available symbols, and a quantity of RBs for sending a PUSCH and a quantity of resources of a DMRS that are configured by a network device, and channel coding is performed on the TB. If that channel coding is performed based on some resources is described, it means that a TBS is determined based on information such as a quantity of available symbols in the resources, and a quantity of RBs for sending a PUSCH and a quantity of resources of a DMRS that are configured by a network device, and channel coding is performed on a TB.

8. Repeated sending of a PUSCH

The repeated sending of the PUSCH refers to sending a plurality of PUSCHs, and the plurality of PUSCHs are a plurality of pieces of same uplink data. Sending of one PUSCH (namely, one piece of uplink data) may be referred to as one time of repeated sending of the PUSCH. The plurality of pieces of same uplink data refer to a plurality of pieces of same or different RVs obtained after channel coding is performed on same system bits. During repeated sending, channel coding is performed on a TB based on L available symbols.

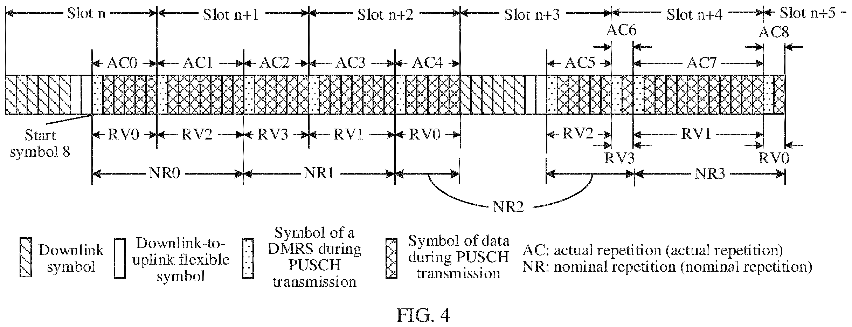

For Type B, a communication standard introduces a parameter "a number of repetitions (numberOfRepetitions-r16)" to configure a number of repetitions. numberOfRepetitions-r16 has 8 configurable values, which are indicated by 3 bits. Various values of the 3 bits correspond to {n1, n2, n3, n4, n7, n8, n12, n16} successively. A value following n indicates the number of repetitions. For example, n1 indicates that sending is performed once, and n16 indicates that sending is performed 16 times. A network device may configure one of the foregoing 8 configurable values configured for a terminal through higher layer signaling, for example, RRC signaling, to indicate the number of repetitions for the terminal. For Type B, starting from a start symbol S in a start slot for repeatedly sending the PUSCH, L*numberOfRepetitions-r16 available symbols are all for repeatedly sending the PUSCH. In this application, "*" refers to "multiply". For example, refer to FIG. 4. If S=8, L=14, and the number of repetitions=4, starting from a start symbol 8 in a slot n, L*4 available symbols are all for repeatedly sending the PUSCH. Every L available symbols starting from the start symbol 8 in the slot n are denoted as one nominal repetition, and symbols that are in a same slot and that are in one nominal repetition are denoted as one actual repetition. One RV of the PUSCH is sent on each actual repetition. For a possible case of the RV sent on each actual repetition, refer to FIG. 4. In the method, the PUSCH may be repeatedly sent by using all available symbols as much as possible.

For Type A, S+L is less than or equal to 14. When the number of repetitions (assumed as R1) is configured for the terminal, the terminal performs detection in each slot in R1 slots (R1 consecutive slots starting from a start slot). When L symbols starting from a start symbol S in a slot are all available symbols, the PUSCH is sent in the slot. Otherwise, the PUSCH is not sent in the slot, and whether another slot satisfies a condition continues to be detected.

The available symbols in this application are not downlink symbols, downlink-to-uplink flexible symbols, or symbols occupied by another transmission.

9. RV of a repeatedly sent PUSCH

To enable a receive end to improve a decoding capability by using a combined receiving method for incremental redundancy (incremental redundancy, IR), a network device performs a configuration so that different RVs are used when the PUSCH is repeatedly sent for a plurality of times. An RV used in each sending of the PUSCH is determined by using both an index p of an actual repetition corresponding to this sending and $rv_{id}$ indicated by an RV indicator field in DCI for scheduling the PUSCH, where $rv_{id}$ is an index of the RV. For example, as specified in 3GPP TS 38.214, an RV corresponding to an actual repetition that is for sending the PUSCH and whose index is p is determined based on Table 4. "mod" in Table 4 refers to "modulo".

**Table 4**

| $rv_{id}$ indicated by the DCI for scheduling the PUSCH | $rv_{id}$ corresponding to the actual repetition whose index is p | | | |
|---|---|---|---|---|
| | p mod 4=0 | p mod 4=1 | p mod 4=2 | p mod 4=3 |
| 0 | 0 | 2 | 3 | 1 |
| 2 | 2 | 3 | 1 | 0 |
| 3 | 3 | 1 | 0 | 2 |
| 1 | 1 | 0 | 2 | 3 |

10. Frequency hopping

The frequency hopping means that frequency domain resources change. Sending a PUSCH in a frequency hopping manner refers to sending the PUSCH on two consecutive time domain resources by using different frequency domain resources. In the description of this application, sending the PUSCH in the frequency hopping manner refers to sending the PUSCH in the frequency hopping manner in a slot, and sending the PUSCH in a non-frequency hopping manner refers to not sending the PUSCH in the frequency hopping manner in a slot.

Some concepts and content in embodiments of this application are briefly described above.

The technical solutions in embodiments of this application may be applied to a 4th generation (4th generation, 4G) system, various systems evolved based on the 4G system, a 5th generation (5th generation, 5G) system, or various systems evolved based on the 5G system, or applied to a future evolved system or a plurality of communication convergence systems. The 4G system may also be referred to as an evolved packet system (evolved packet system, EPS). A core network (core network, CN) of the 4G system may be referred to as an evolved packet core (evolved packet core, EPC), and an access network may be referred to as long term evolution (long term evolution, LTE). A core network of the 5G system may be referred to as a 5GC (5G core), and an access network may be referred to as NR. The 5G system may be a non-standalone (non-standalone, NSA) 5G system or a standalone (standalone, SA) 5G system.

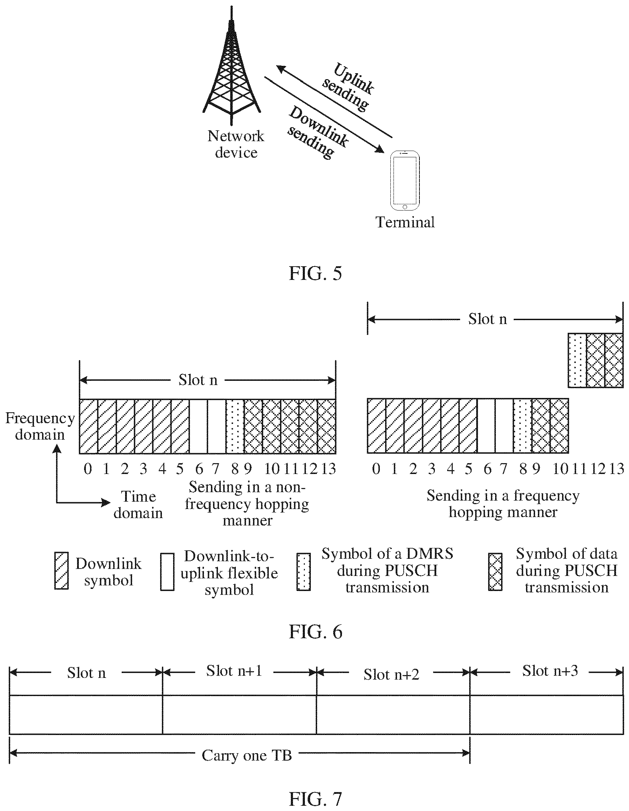

Network elements in this application include a network device and a terminal in a communication system. Refer to FIG. 5. A method provided in embodiments of this application mainly relates to communication between a network device and a terminal. The network device and the terminal may communicate with each other through an air interface (Uu interface, namely, a UTRAN-to-UE interface).

The network device in embodiments of this application is an entity that is on a network side and that is configured to send a signal, or receive a signal, or send a signal and receive a signal. The network device may be an apparatus deployed in a radio access network (radio access network, RAN) to provide a wireless communication function for the terminal. For example, the network device may be a transmission reception point (transmission reception point, TRP), a base station, a control node (for example, a network controller, a wireless controller (for example, a wireless controller in a cloud radio access network (cloud radio access network, CRAN) scenario)), or the like in any form. Specifically, the network device may be a macro base station, a micro base station (also referred to as a small cell), a relay station, an access point (access point, AP), or the like in any form, or may be an antenna panel of a base station. The control node may be connected to a plurality of base stations, and configure resources for a plurality of terminals covered by the plurality of base stations. In systems using different radio access technologies, names of devices having a base station function may be different. For example, the device having the base station function may be a macro base station evolved NodeB (evolved NodeB, eNB or eNodeB) in a universal mobile telecommunications system (universal mobile telecommunications system, UMTS) or an LTE system, may be a micro base station eNB in a heterogeneous network (heterogeneous network, HetNet) scenario, may be a base band unit (base band unit, BBU) and a remote radio unit (remote radio unit, RRU) in a distributed base station scenario, may be a baseband pool (BBU pool) and an RRU in the CRAN scenario, and may be a next generation node base station (next generation node base station, gNB) in the 5G system or an NR system. A specific name of the base station is not limited in this application. Alternatively, the network device may be a network device or the like in a future evolved public land mobile network (public land mobile network, PLMN).

The terminal in embodiments of this application is an entity that is on a user side and that is configured to receive a signal, send a signal, or receive a signal and send a signal. The terminal is configured to provide users with one or more of a voice service and a data connectivity service. The terminal may also be referred to as user equipment (user equipment, UE), a terminal device, an access terminal, a subscriber unit, a subscriber station, a mobile station, a remote station, a remote terminal, a mobile device, a user terminal, a wireless communication device, a user agent, or a user apparatus. The terminal may be a mobile station (mobile station, MS), a subscriber unit (subscriber unit), an unmanned aerial vehicle, an Internet of Things (Internet of Things, IoT) device, a station (station, ST) in a wireless local area network (wireless local area network, WLAN), a cellular phone (cellular phone), a user handheld communication device (such as a smart phone (smart phone), a mobile phone, or a tablet computer), a cordless phone, a wireless data card, a session initiation protocol, SIP) telephone, a wireless local loop (wireless local loop, WLL) station, a personal digital assistant (personal digital assistant, PDA) device, a laptop computer (laptop computer), a machine type communication (machine type communication, MTC) terminal, a handheld device with a wireless communication function, a computing device or another processing device connected to a wireless modem, an in-vehicle device (for example, an in-vehicle communication module or another embedded communication module), or a wearable device (which may also be referred to as a wearable intelligent device). Alternatively, the terminal may be a terminal or the like in the future evolved PLMN.

Sending of a PUSCH between the network device and the terminal has the following two problems.

Problem 1

When sending the PUSCH, the terminal determines, based on a configuration of the network device, whether to send the PUSCH in a frequency hopping manner. When the network device configures that the PUSCH is sent in the frequency hopping manner, the terminal sends the PUSCH in the frequency hopping manner. In this case, if a quantity of symbols of resources for sending the PUSCH is small, the resources after frequency hopping need to independently carry a DMRS. As a result, the resources for sending data on the PUSCH are reduced, and resource utilization is reduced. For example, refer to FIG. 6. In a slot n, resources for sending a PUSCH are a symbol 8 to a symbol 13. In this case, if the PUSCH is sent in a non-frequency hopping manner, only one symbol in the 6 symbols needs to carry a DMRS. If the PUSCH is sent in the frequency hopping manner, 2 symbols in the 6 symbols need to carry the DMRS. As a result, the resources for sending data on the PUSCH are reduced, and resource utilization is reduced.

Problem 2

In an architecture shown in FIG. 5, there is downlink sending from the network device to the terminal and uplink sending from the terminal to the network device. Because costs of the network device are relatively high, a coverage range of downlink sending is generally higher than a coverage range of uplink sending. Due to a cost limitation factor on a terminal side, only an inexpensive power amplifier can be used, and a power upper limit of the power amplifier is lower than that on a network device side. Therefore, research on coverage enhancement mainly focuses on how to improve the coverage range of uplink sending. The uplink sending generally includes a physical uplink control channel (physical uplink control channel, PUCCH) and a PUSCH. The PUCCH is a control channel, has a small amount of information to be sent, and does not require an excessively high signal-to-noise ratio (signal-to-noise ratio, SNR). Even if the terminal is far away from the network device, requirements of the SNR can be satisfied. Therefore, a coverage range is large. The PUSCH is a data channel, has a large amount of information to be sent, and requires a higher SNR. The requirements of the SNR can be satisfied only when the terminal is close to the network device. Therefore, a coverage range is small. Therefore, how to improve a coverage range of a PUSCH is a more urgent problem.

In the currently discussed method for improving the coverage range of the PUSCH, one TB is carried over a plurality of slots (1 TB over multiple slots). By integrating resources on a plurality of slots (for example, a slot n to a slot n+2 in FIG. 7), a lower code rate may be used when data carried on the PUSCH is sent, so that an excessively high SNR is not required, and coverage of the PUSCH is improved. Currently, this solution is only in a discussion phase. Currently, there is no solution to how to carry one TB over a plurality of slots specifically.

Problem 3

To improve the coverage range of the PUSCH, in addition to carrying one TB over a plurality of slots, the PUSCH may alternatively be repeatedly sent in a plurality of slots. A larger number of repetitions indicates that more symbols may be included in the PUSCH. In this case, the SNR may be properly reduced, to improve the coverage range of the PUSCH. Currently, how to determine a plurality of slots for sending a PUSCH or repeatedly sending a PUSCH is also a problem that needs to be resolved.

To resolve the foregoing problems, this application provides a data transmission method. The data transmission method may be implemented by using the following Embodiment 1 or Embodiment 2. In Embodiment 1, a terminal may determine, based on a quantity of available symbols, whether to send a PUSCH in a frequency hopping manner; and may send the PUSCH in the frequency hopping manner when the quantity of the symbols is large, or send the PUSCH in a non-frequency hopping manner when the quantity of the symbols is small, thereby improving resource utilization, and resolving the foregoing problem 1. Embodiment 2 provides a solution to how to carry one TB over a plurality of slots, to resolve the foregoing problem 2. Embodiment 3 provides a method for determining a plurality of slots for sending a PUSCH or repeatedly sending a PUSCH, to resolve the foregoing problem 3. The following separately describes methods provided in Embodiment 1, Embodiment 2, and Embodiment 3.

**Embodiment 1**

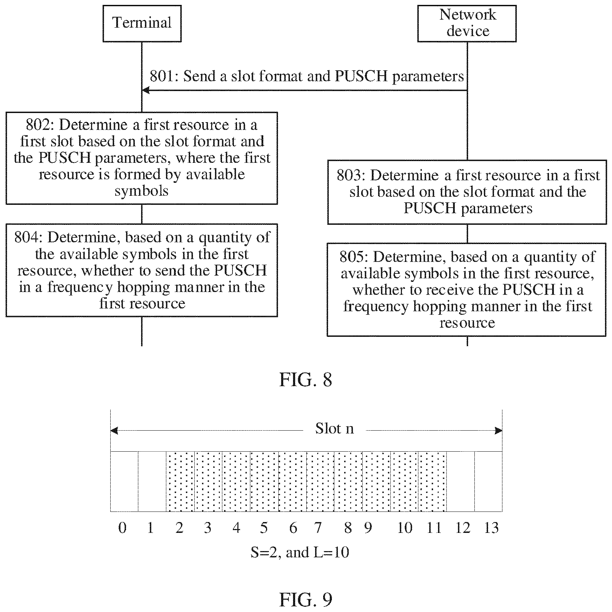

Refer to FIG. 8, a method provided in Embodiment 1 includes the following steps.

801: A network device sends a slot format and PUSCH parameters to a terminal. Correspondingly, the terminal receives the slot format and the PUSCH parameters from the network device.

In embodiments of this application, an action performed by the network device may alternatively be performed by a chip located outside or inside the network device, and an action performed by the terminal may alternatively be performed by a chip located outside or inside the terminal. For ease of description, in this application, the network device and the terminal are used as examples to describe the methods provided in this application.

The slot format indicates a type of each symbol in a slot. The network device may semi-statically or dynamically configure the slot format for the terminal. A specific configuration process is well known to a person skilled in the art, and details are not described again. The PUSCH parameters are for determining PUSCH resources. The PUSCH resources include PUSCH time domain resources and PUSCH frequency domain resources. The PUSCH parameters include time domain parameters and frequency domain parameters. The time domain parameters are for determining the PUSCH time domain resources, and the frequency domain parameters are for determining the PUSCH frequency domain resources. The time domain parameters may include one or more of the following information: information (for specific content, refer to Embodiment 2) indicating a quantity of slots, a number of repetitions, and an index (for example, a row index in Table 2) that corresponds to a start symbol S, a symbol quantity L, and $K_2$. The quantity of slots is a quantity of slots that carry one TB. When a plurality of slots carry one TB, channel coding is performed on the TB based on some or all available symbols in the plurality of slots, and a PUSCH (namely, data after channel coding) is sent in the plurality of slots. The frequency domain parameters include parameters (for example, a bitmap, $RB_{start}$, and L') indicating the PUSCH frequency domain resources. For details, refer to the foregoing content related to frequency domain resource allocation of the PUSCH. The PUSCH parameters may also be referred to as PUSCH scheduling parameters.

The PUSCH parameters may be carried in RRC signaling and/or DCI.

802: The terminal determines a first resource in a first slot based on the slot format and the PUSCH parameters, where the first resource is formed by available symbols.

The first slot may be an uplink slot, or may be a special slot (for example, a downlink-to-uplink slot). This is not limited in this application. The first resource includes uplink symbols and some flexible symbols, and does not include a downlink symbol or a flexible symbol for downlink-to-uplink conversion. The available symbols in the first resource are consecutive in time domain. The first resource in this application is a time domain resource. The terminal may determine a frequency domain resource corresponding to the first resource based on the frequency domain parameters. For a specific process, refer to the foregoing content related to frequency domain resource allocation of the PUSCH. Details are not described again.

The first slot may be specifically determined in the following Case 1 or Case 2. The following describes Case 1, Case 2, and determining of the first resource in the first slot in the two cases.

Case 1: When the PUSCH is sent in only one slot, the slot is the first slot.

In Case 1, the terminal may determine, based on $K_2$ indicated by the time domain parameters and a slot (assumed as a slot $n-K_2$) in which DCI for scheduling the PUSCH is, that the slot for sending the PUSCH is a slot n. In one case, the first resource is a resource formed by available symbols in the slot n. In another case, the terminal may alternatively determine the first resource based on the slot format, and the start symbol S and the symbol quantity L (where S+L is less than or equal to 14) that are indicated by the time domain parameters. If L symbols starting from the start symbol S in the slot n are all available symbols, the first resource is the L symbols starting from the start symbol S in the slot n. For example, refer to FIG. 9. If S=2 and L=10, and if 10 symbols (that is, a symbol 2 to a symbol 11) starting from the start symbol S are all available symbols, it is determined that the symbol 2 to the symbol 11 in the slot n are the first resource.

Case 2: The first slot is one of N slots, where N is an integer greater than 1.

The N slots may have the following cases.

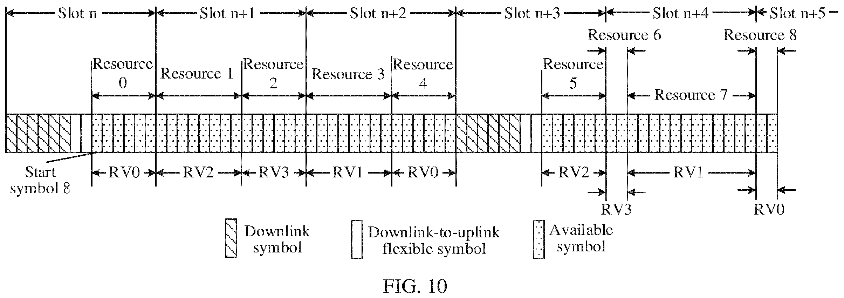

(1) The N slots are N consecutive slots that start from a start slot.
(2) The N slots are N slots that start from a start slot and do not include a downlink slot.
(3) The N slots are N slots that start from a start slot and do not include a downlink slot or a special slot.
(4) The N slots are N uplink slots that start from a start slot.
(5) The N slots are N slots that start from a start slot and satisfy that symbols starting from a start symbol S in each slot are all available symbols. In other words, the symbols starting from the start symbol S in each slot in the N slots are all available symbols.
(6) The N slots are N slots that start from a start slot and satisfy that L symbols starting from a start symbol S in each slot are all available symbols. In other words, the L symbols starting from the start symbol S in each slot in the N slots are all available symbols.
(7) The N slots are slots that start from a start symbol S in a start slot and correspond to L*X available symbols. X is a quantity of the slots or a number of repetitions. For example, based on a slot format shown in FIG. 10, if the start slot is a slot n, S=8, L=14, and the number of repetitions or the quantity of the slots is 4, the N slots are the slot n to a slot n+5.
(8) The N slots are N slots that satisfy that L symbols starting from a start symbol S in a start slot are all available symbols and symbols in other slots in the N slots are all available symbols. In other words, the L symbols starting from the start symbol S in the start slot in the N slots are all available symbols, and symbols in a second slot to an $N^{th}$ slot in the N slots are all available symbols.
(9) The N slots are N slots that satisfy that symbols starting from a start symbol S in a start slot are all available symbols and symbols in other slots in the N slots are all available symbols. In other words, the symbols starting from the start symbol S in the start slot in the N slots are all available symbols, and symbols in a second slot to an $N^{th}$ slot in the N slots are all available symbols.
(10) The N slots are N slots that start from a start slot and have available symbols. In other words, each slot in the N slots has available symbols.
(11) The N slots are N slots that start from a start slot and satisfy that a quantity of available symbols is greater than or equal to a fifth threshold. In other words, a quantity of available symbols in each slot in the N slots is greater than or equal to the fifth threshold. Greater than or equal to herein may also be replaced with greater than. The fifth threshold may be preset, or specified in a protocol, or determined by the network device and the terminal through negotiation. This is not limited in this application.

It should be noted that a value of N may be directly or indirectly configured in the PUSCH parameters. Alternatively, the value of N may be determined by the terminal. For example, N' is configured in the PUSCH parameters. In this case, the terminal may determine the N slots based on the slot format. For example, the terminal determines that all slots that satisfy characteristics described in one of the foregoing cases in N' slots starting from a start slot are the N slots in this case. For example, for Case (1), consecutive slots in N' slots starting from a start slot are the N slots, and in this case, the N slots are the N' slots. For Case (2), all slots that are not downlink slots in N' slots starting from a start slot are the N slots. For Case (3), all slots that are not downlink slots or special slots in N' slots starting from a start slot are the N slots. For Case (4), all uplink slots in N' slots starting from a start slot are the N slots. For Case (5), all slots that satisfy that symbols starting from a start symbol S are all available symbols in N' slots starting from a start slot are the N slots. Other cases may be deduced in a similar manner, and details are not described again.

In the foregoing Case (5) to Case (9), S and L may be configured in the PUSCH parameters.

There may be an unavailable slot in the determined N slots in Case (1). For example, if there is a downlink slot in the N slots, the slot cannot be for sending the PUSCH. However, compared with Case (1), the determined N slots in Case (2) to Case (11) may be all for sending the PUSCH. If the N slots are the N slots described in Case (1), a slot that satisfies a specific condition in the N slots is for sending the PUSCH. The condition is that L symbols starting from a start symbol S in a slot are available symbols (in other words, for each slot in the N slots, the slot can be for sending the PUSCH only when L symbols starting from a start symbol S in the slot are available symbols). Alternatively, the condition is that there are available symbols in a slot (in other words, for each slot in the N slots, the slot can be for sending the PUSCH only when there are available symbols in the slot). Alternatively, the condition is that symbols starting from a start symbol S in a slot are all available symbols (in other words, for each slot in the N slots, the slot can be for sending the PUSCH only when symbols starting from a start symbol S in the slot are all available symbols).

The terminal may determine, based on $K_2$ indicated by the time domain parameters and a slot (assumed as a slot n-$K_2$) in which DCI for scheduling the PUSCH is, that a start slot for sending the PUSCH is a slot n.

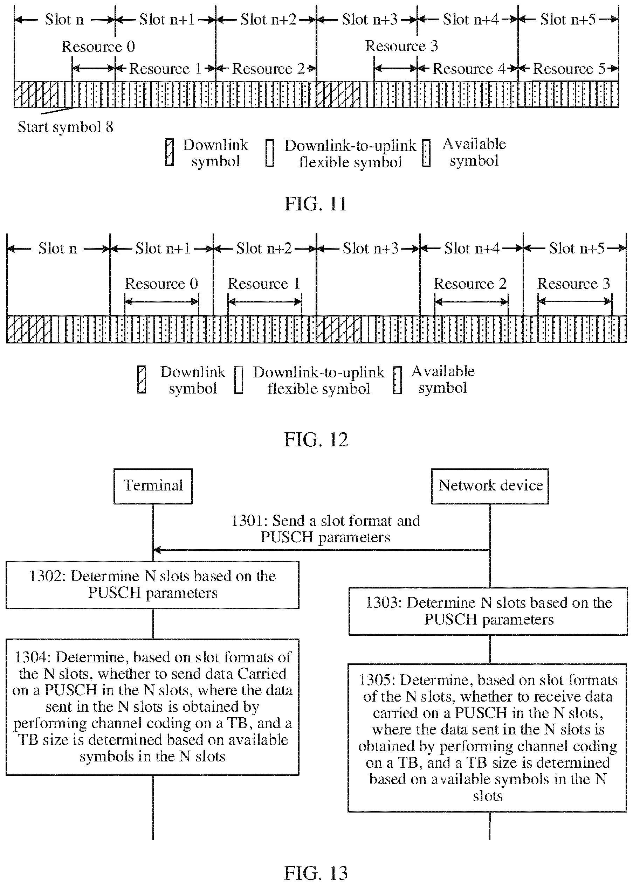

In a first scenario, the N slots are for sending the PUSCH. That "the N slots are for sending the PUSCH" refers to sending data obtained after channel coding is performed on a TB in the N slots, where channel coding is performed on the TB based on some or all available symbols in the N slots. Channel coding may be performed on the TB based on all available symbols in the N slots, or channel coding may be performed on the TB based on available symbols for sending the PUSCH in the N slots, or channel coding may be performed on the TB based on all available symbols in some slots (for example, consecutive uplink slots) in the N slots, or channel coding may be performed on the TB based on available symbols for sending the PUSCH in some slots (for example, consecutive uplink slots) in the N slots. For example, assuming that channel coding is performed on the TB based on all the available symbols in the N slots, if the N slots are 6 slots shown in FIG. 11, data sent in the N slots may be data obtained after channel coding is performed on the TB based on available symbols in a resource 0 to a resource 5 in FIG. 11. For another example, it is assumed that channel coding is performed on the TB based on the available symbols for sending the PUSCH in the N slots, the N slots are 6 slots shown in FIG. 12, the available symbols for sending the PUSCH in the N slots are L symbols starting from a start symbol S in each slot in N1 slots, and the N1 slots are slots that are in the N slots and satisfy that the L symbols starting from the start symbol S are all available symbols. In this case, if S=2 and L=10, the available symbols for sending the PUSCH in the N slots are a resource 0 to a resource 3 in FIG. 12, and data sent in the N slots may be data obtained after channel coding is performed on the TB based on the resource 0 to the resource 3. For another example, assuming that channel coding is performed on the TB based on all the available symbols in the consecutive uplink slots in the N slots, if the N slots are 6 slots shown in FIG. 12, data sent in the N slots may be data obtained after channel coding is performed on the TB based on available symbols in a slot n+1 and a slot n+2.

In the first scenario, the terminal may determine the N slots based on the information indicating the quantity of slots in the PUSCH parameters, or the information indicating the quantity of slots in the PUSCH parameters and the slot format (Specifically, the terminal determines the value of N based on the information indicating the quantity of slots, and determines the N slots based on the slot format; or determines the L*X available symbols starting from the start symbol S in the start slot based on S and L, and then determines the N slots based on the available symbols, where X is the quantity of slots).

In a second scenario, the N slots are for repeatedly sending the PUSCH. That "the N slots are for repeatedly sending the PUSCH" refers to sending, in the N slots, data obtained after channel coding is performed on the TB based on available symbols in a slot (for example, a first slot, or a slot with a largest quantity of available symbols) in the N slots. Alternatively, that "the N slots are for repeatedly sending the PUSCH" refers to sending, in the N slots, data obtained after channel coding is performed on the TB based on L available symbols. In this case, the terminal may determine the N slots based on the number of repetitions in the PUSCH parameters, or the number of repetitions in the PUSCH parameters and the slot format (Specifically, the terminal determines the value of N based on the number of repetitions, and determines the N slots based on the slot format; or determines the L*X available symbols starting from the start symbol S in the start slot based on S and L, and then determines the N slots based on the available symbols, where X is the number of repetitions).

The first slot may be an uplink slot or a special slot in the N slots.

The first resource may be a resource formed by available symbols in the first slot. For example, the N slots are the 6 slots shown in FIG. 11. If the first slot is a slot n, the first resource may be the resource 0. If the first slot is a slot n+1, the first resource may be the resource 1.

Alternatively, the first resource may be a resource formed by L available symbols starting from a start symbol S in the first slot. In this case, the first slot is a slot in which the L symbols starting from the start symbol S are all available symbols. For example, the N slots are the 6 slots shown in FIG. 12. If the first slot is a slot n+1, the first resource is the resource 0. If the first slot is a slot n+2, the first resource is the resource 1.

Alternatively, the first resource may be a resource for sending a same RV in the first slot. In this case, the first resource is a resource corresponding to an actual repetition. For example, the N slots are 6 slots shown in FIG. 10. If the first slot is a slot n, the first resource may be a resource 0. If the first slot is a slot n+1, the first resource may be a resource 1, or may be a resource 2.

803: The network device determines a first resource in a first slot based on the slot format and the PUSCH parameters.

A specific implementation process of step 803 is similar to that of step 802. A difference lies only in that the network device is described herein. For understanding, refer to description of step 802. Details are not described again.

Step 803 may be performed after step 802, or may be performed before step 802. This is not limited in this application.

804: The terminal determines, based on a quantity of the available symbols in the first resource, whether to send the PUSCH in a frequency hopping manner in the first resource.

805: The network device determines, based on a quantity of available symbols in the first resource, whether to receive the PUSCH in a frequency hopping manner in the first resource.

Optionally, during specific implementation, step 804 includes: When the quantity of the available symbols in the first resource is greater than or equal to a first threshold, the terminal enables frequency hopping, that is, sends the PUSCH in the frequency hopping manner in the first resource; and when the quantity of available symbols in the first resource is less than a second threshold, the terminal does not enable frequency hopping, that is, sends the PUSCH in a non-frequency hopping manner in the first resource. Correspondingly, during specific implementation, step 805 includes: When the quantity of the available symbols in the first resource is greater than or equal to a first threshold, the network device receives the PUSCH in the frequency hopping manner in the first resource; and when the quantity of available symbols in the first resource is less than a second threshold, the network device receives the PUSCH in a non-frequency hopping manner in the first resource.

The second threshold is less than or equal to the first threshold. In the optional method, "greater than or equal to a first threshold" may alternatively be replaced with "greater than a first threshold". In this case, "less than a second threshold" may alternatively be replaced with "less than or equal to a second threshold". "In a non-frequency hopping manner in the first resource" means that intra-slot frequency hopping is not performed, and inter-slot frequency hopping may or may not be performed. "In the frequency hopping manner in the first resource" means that intra-slot frequency hopping is performed, and inter-slot frequency hopping may or may not be performed.

Sending the PUSCH in the frequency hopping manner may alternatively be configured in the PUSCH parameters.

Optionally, the PUSCH parameters indicate a quantity of symbols of the PUSCH and/or a quantity of symbols occupied by a DMRS, and the first threshold and/or the second threshold are/is related to the quantity of the symbols of the PUSCH and/or the quantity of the symbols occupied by the DMRS. The quantity of the symbols of the PUSCH may be the foregoing symbol quantity L. When the quantity of symbols occupied by the DMRS is larger, the first threshold and/or the second threshold may be larger. When the quantity of symbols of the PUSCH is larger, the first threshold and/or the second threshold may be larger. The first threshold is generally the same as the second threshold. For example, if the first threshold and/or the second threshold are/is related only to the quantity of symbols of the PUSCH, the first threshold and/or the second threshold may be, for example, $\lfloor L/2 \rfloor$, $\lfloor L/2 \rfloor + 1$, or $\lfloor L/2 \rfloor - 1$. If the first threshold and the second threshold are related only to the quantity of symbols occupied by the DMRS, if the quantity of symbols occupied by the DMRS is 2, the first threshold and the second threshold may be 10; and if the quantity of symbols occupied by the DMRS is 1, the first threshold and the second threshold may be 8. If the first threshold and the second threshold are related to the quantity of symbols of the PUSCH and the quantity of symbols occupied by the DMRS, the first threshold and the second threshold may be, for example, $\lfloor L/2 \rfloor + S$ or $\lfloor L/2 \rfloor + \lfloor S/2 \rfloor$, where S refers to the quantity of symbols occupied by the DMRS.

Alternatively, the first threshold and/or the second threshold may be preset, or specified in a protocol, or determined by the network device and the terminal through negotiation, or indicated by the network device. This is not limited in this application. If the first threshold and/or the second threshold are/is indicated by the network device, the network device may notify the first threshold and/or the second threshold to the terminal through configuration signaling such as RRC or indication signaling such as DCI.

In step 804, regardless of the quantity of the available symbols in the first resource, the terminal finally needs to send the PUSCH. A difference lies only in whether the PUSCH is sent in the frequency hopping manner or the PUSCH is sent in the non-frequency hopping manner. An alternative implementation of step 804 is: The terminal determines, based on a quantity of the available symbols in the first resource, whether to send the PUSCH in the first resource. During implementation of this step, if sending the PUSCH in a frequency hopping manner is configured in the PUSCH parameters and the quantity of the available symbols in the first resource is greater than or equal to (greater than or equal to herein may also be replaced with greater than) a sixth threshold, the terminal sends the PUSCH in the first resource; otherwise, the terminal does not send the PUSCH in the first resource. If sending the PUSCH in a non-frequency hopping manner is configured in the PUSCH parameters and the quantity of the available symbols in the first resource is greater than or equal to (greater than or equal to herein may also be replaced with greater than) a seventh threshold, the terminal sends the PUSCH in the first resource; otherwise, the terminal does not send the PUSCH in the first resource. When the terminal determines to send the PUSCH in the first resource, whether to send the PUSCH in the frequency hopping manner depends on a configuration of the PUSCH parameters.

The sixth threshold may be greater than the seventh threshold. For example, if the sixth threshold is denoted as Y2, the seventh threshold is denoted as Y1, and the quantity of symbols occupied by the DMRS is denoted as S, Y2=Y1+S. Alternatively, the sixth threshold and/or the seventh threshold may be preset, or specified in a protocol, or determined by the network device and the terminal through negotiation. This is not limited in this application.

In the foregoing embodiment, a value of S may be as follows: If the network device configures a single-symbol DMRS (in other words, one DMRS occupies 1 symbol) and there is no additional DMRS, S=1; if the network device configures a dual-symbol DMRS (in other words, one DMRS occupies 2 symbols) and there is no additional DMRS, S=2; if the network device configures a single-symbol DMRS and there is an additional DMRS, S=2; or if the network device configures a dual-symbol DMRS and there is an additional DMRS, S=4.

The alternative implementation of step 804 specifies a lower limit of the available symbols for sending the PUSCH in a case of frequency hopping or non-frequency hopping.

n the foregoing embodiment, after the terminal determines to send the PUSCH in the frequency hopping manner in the first resource, in an implementation, a frequency hopping position of the terminal may be related to a quantity of available symbols in a slot in which the first resource is. For example, if the quantity of available symbols in the slot is K, the frequency hopping position may be a $\lfloor K/2 \rfloor$ or $\lceil K/2 \rceil$ symbol in the K available symbols. In another implementation, the frequency hopping position of the terminal may be related to a configured symbol quantity L. For example, the frequency hopping position may be an $\lfloor L/2 \rfloor^{\text{th}}$ or $(\lfloor L/2 \rfloor + 1)^{\text{th}}$ or $(\lfloor L/2 \rfloor - 1)^{\text{th}}$ symbol in the L symbols in the slot in which the first resource is.

It should be noted that, there is a special slot when time domain resources are configured. For example, in a downlink-to-uplink slot, a ratio of downlink symbols to flexible symbols to uplink symbols is 10:2:2 or 6:4:4. When there is a special slot in the N slots, when a resource in the special slot needs to be for sending the PUSCH, uplink symbols in the special slot are located in last several symbols in the special slot, and a start symbol S corresponding to Type A is equal to 0. Therefore, if the resource in the special slot is determined by using the start symbol S corresponding to Type A and the symbol quantity L, there is a high probability that the special slot cannot be for sending the PUSCH, causing a waste of the resource.

Therefore, additionally, the start symbol S and the symbol quantity L may be directly or indirectly configured for the special slot, which may be specifically implemented in any one of the following manners 11 to 13. In this application, for ease of description, the start symbol S configured for the special slot (which may also be described as the start symbol S corresponding to the special slot) is denoted as Ss, and the symbol quantity L configured for the special slot (which may also be described as the symbol quantity L corresponding to the special slot) is denoted as $L_S$.

Manner 11: The start symbol Ss and/or the symbol quantity $L_S$ corresponding to the special slot are/is directly configured.

When only Ss is configured, it indicates that available symbols starting from the symbol Ss in the special slot are all for sending the PUSCH. When only $L_S$ is configured, it indicates that available symbols in $L_S$ symbols starting from a symbol (14-$L_S$) in the special slot are for sending the PUSCH. When both Ss and $L_S$ are configured, it indicates that available symbols in $L_S$ symbols starting from the symbol Ss in the special slot are for sending the PUSCH.

Manner 12: The start symbol Ss corresponding to the special slot, and a sum (because the symbol quantity has a different meaning from conventional symbol quantities, the symbol quantity is denoted as L2 herein) of the symbol quantity $L_S$ corresponding to the special slot and a quantity of uplink symbols in next slot are configured. In this case, $L_S$=L2 - 14 × [L2/14]. For example, a slot n is a special slot, and a slot n+1 is an uplink slot. The terminal may obtain, through calculation based on values of Ss and L2, a quantity of symbols for sending the PUSCH in the special slot. If Ss=10 and L2=18=$L_S$+14, in the special slot, the PUSCH is sent by using that Ss=10 and $L_S$=4; and in the uplink slot, the PUSCH is sent by using that S=0 and L=14. If Ss=12 and L2=16=$L_S$+14, in the special slot, the PUSCH is sent by using that Ss=12 and $L_S$=2; and in the uplink slot, the PUSCH is sent by using that S=0 and L=14.

Manner 13: When the PUSCH is sent or repeatedly sent in the N slots, a start symbol S in a start slot and a total symbol quantity (because the symbol quantity has a different meaning from conventional symbol quantities, the symbol quantity is denoted as L3 herein) of PUSCH resources are configured.

If the start slot in the N slots is a special slot and other slots are uplink slots, the configured start symbol S is Ss, and $L_S$=14-$S_S$. In this case, L3=(14-Ss)+(N-1)*14. If the network device does not configure N for the terminal,

$$N=\frac{L3-(14-S_S)}{14}+1$$

.

If the start slot in the N slots is a special slot and other slots include an uplink slot and another special slot, Ss corresponding to a first special slot is the configured start symbol S, and $L_S$ corresponding to the first special slot is equal to 14-Ss. In this case, L3=(14-$S_S$)+(N-2)*14+$L_{S2}$, and $L_{S2}$ is a symbol quantity corresponding to a second special slot. If the network device does not configure N for the terminal, $$N=\left\lfloor\frac{L3-(14-S_S)}{14}\right\rfloor+2$$ , and $L_{S2}$ corresponding to the second special slot is equal to $$L3-(14-S_S)-\left\lfloor\frac{L3-(14-S_S)}{14}\right\rfloor*14$$ . A start symbol corresponding to the second special slot is that $S_{S2}$=14-$L_{S2}$.

If one slot in other slots other than the start slot in the N slots is a special slot, L3=(14-S)+(N-2)*14+Ls. In this case, if the network device configures N for the terminal, it may be determined that $L_S$=L3-(14-S)-(N-2)*14. If the network device does not configure N for the terminal, $$N=\frac{L3-(14-S)}{14}+2$$ , Ls=L3-(14-S)-(N-2)*14, and a start symbol corresponding to the special slot is that $S_S$=14-$L_S$.

If the start slot in the N slots is a special slot and L symbols starting from a start symbol S in others slot in the N slots are for sending the PUSCH, the configured start symbol S is Ss, and $L_S$=14-$S_S$. In this case, L3=(14-Ss)+L*(N-1). If the network device does not configure N for the terminal, $$N=\frac{L3-(14-S_S)}{L}+1$$ .

If one slot in slots other than the start slot in the N slots is a special slot and L symbols starting from a start symbol S in slots other than the special slot in the N slots are for sending the PUSCH, L3=(14-S)+L*(N-2)+$L_S$. In this case, if the network device configures N for the terminal, it may be determined that $L_S$=L3-(14-S)-L*(N-2). If the network device does not configure N for the terminal, $$N=\left\lfloor\frac{L3-(14-S)}{L}\right\rfloor+2$$ , Ls=L3-(14-S)-L*(N-2), and a start symbol corresponding to the special slot is that $S_S$=14-$L_S$.

Manner 11 and Manner 12 may enable the terminal to determine Ss and $L_S$. In Manner 13, the terminal may determine Ss and $L_S$, and may also determine N. Therefore, in Manner 13, the network device may not configure N for the terminal, and indirectly indicate a value of N through L3.

During specific implementation of Manner 11 to Manner 13, the network device may send configuration information to the terminal, where the configuration information is for configuring the start symbol Ss and/or the symbol quantity $L_S$ corresponding to the special slot. The terminal determines, based on the configuration information, the start symbol $S_S$ and/or the symbol quantity $L_S$ corresponding to the special slot. A value configured in the configuration information may be a value configured in the corresponding manner.

During specific implementation of the foregoing Manner 11, a time domain resource allocation list similar to that in Table 1 may be separately configured for the special slot. For example, in PUSCH configuration parameters in 3GPP TS 38.331, a new parameter "startSymbol_special_slot" is added for configuring the start symbol of the special slot, and a new parameter "length_special_slot" is added for configuring a symbol length of the special slot. During specific implementation of Manner 12 or Manner 13, if L2 or L3 is greater than 14, a row of a value range of L may be added to Table 1 through a configuration, where the value range of L includes some possible values of L2 or L3 configured in Manner 12 or Manner 13.

Values configured in any one of the foregoing Manner 11 to Manner 13 may also be configured in the foregoing Table 2. For example, one row (or more rows) of values configured in any one of Manner 11 to Manner 13 are added to Table 2 through a configuration of RRC signaling.

Optionally, the PUSCH parameters further indicate a start symbol and/or a symbol quantity corresponding to a special slot. In this case, when the first slot is a special slot, the terminal may determine, based on the PUSCH parameters, a start symbol and/or a symbol quantity corresponding to the first slot. For example, when values configured in any one of Manner 11 to Manner 13 are configured in the foregoing Table 2, the PUSCH parameters may carry a row index in Table 2, and parameters corresponding to the row index may directly or indirectly indicate the start symbol and the symbol quantity corresponding to the special slot.

Optionally, the method further includes: The network device sends first indication information to the terminal, where the first indication information indicates a DMRS position in the first resource; and the DMRS position is one or more symbols (where the plurality of symbols may be consecutive or inconsecutive) in a first available symbol to a fourth available symbol in the first resource, or the DMRS position is a third last symbol and/or a fourth last symbol in the first resource. Correspondingly, the terminal receives the first indication information from the network device. In a subsequent process, the terminal may determine a position of the DMRS in the sent PUSCH based on the first indication information.

In the optional method, a problem of how to send the DMRS when sending the PUSCH in the manner in this application can be resolved.

In conventional technologies, when a PUSCH is repeatedly sent, if a PUSCH mapping type is Type A, a parameter "dmrs-TypeA-Position" is for configuring that a third (a value of "dmrs-TypeA-Position" is 2) or fourth (the value of "dmrs-TypeA-Position" is 3) symbol in each slot carries a DMRS. Because first several symbols in a special slot may be downlink symbols, this configuration is not applicable. Therefore, a position of a DMRS in the special slot needs to be redefined. The optional method may further resolve this problem. For example, there may be the following manners.

Manner 21: The value configured in "dmrs-TypeA-Position" is 2, indicating that a third symbol of PUSCH resources is for sending the DMRS. The value configured in "dmrs-TypeA-Position" is 3, indicating that a fourth symbol of the PUSCH resources is for sending the DMRS.

Manner 22: The value configured in "dmrs-TypeA-Position" is 2, indicating that a first symbol of PUSCH resources is for sending the DMRS. The value configured in "dmrs-TypeA-Position" is 3, indicating that a second symbol of the PUSCH resources is for sending the DMRS.

Manner 23: The value configured in "dmrs-TypeA-Position" is 2, indicating that a second symbol of PUSCH resources is for sending the DMRS. The value configured in "dmrs-TypeA-Position" is 3, indicating that a third symbol of the PUSCH resources is for sending the DMRS.

Manner 24: The value configured in "dmrs-TypeA-Position" is 2, indicating that a third symbol of PUSCH resources is for sending the DMRS. The value configured in "dmrs-TypeA-Position" is 3, indicating that a fourth symbol of the PUSCH resources is for sending the DMRS.

In the method provided in Embodiment 1, an association relationship between frequency hopping and available symbols is provided. The terminal may determine, based on a quantity of available symbols in a slot, whether to send the PUSCH in the frequency hopping manner; and may send the PUSCH in the frequency hopping manner when the quantity of the symbols is large, or send the PUSCH in the non-frequency hopping manner when the quantity of the symbols is small, thereby improving resource utilization.

A PUSCH mapping type in the method provided in Embodiment 1 may be Type A, or may be Type B.

During specific implementation of the method provided in Embodiment 1, the terminal may determine each resource in each slot in the N slots, and determine, based on a quantity of available symbols in each resource, whether to send the PUSCH in the frequency hopping manner in the resource. Alternatively, the terminal may determine some or all resources in some slots in the N slots, and determine, based on a quantity of available symbols in each resource, whether to send the PUSCH in the frequency hopping manner in the resource. There may be a plurality of resources in one slot. A method for determining resources in each slot is similar to a method for determining a first resource in a first slot, and details are not described again.

In the method provided in Embodiment 1, the terminal may determine, based on the quantity of the available symbols in the first resource, whether to send the PUSCH in the frequency hopping manner in the first resource; and may send the PUSCH in the frequency hopping manner when the quantity of the symbols is large, or send the PUSCH in the non-frequency hopping manner when the quantity of the symbols is small, thereby improving resource utilization.

**Embodiment 2**

Currently, a solution of carrying one TB over a plurality of slots is only in a discussion phase. For how to carry one TB over a plurality of slots specifically, there are the following two problems.

Problem 1: Because a plurality of slots are spanned, a quantity of symbols of PUSCH resources is greater than 14, but L in an original combination of S and L is less than or equal to 14. Therefore, how to indicate, with low overheads, the quantity of symbols of the PUSCH resources or a quantity of the slots spanned by one TB is a problem to be resolved.

Problem 2: Because one TB spans a plurality of slots, how to determine to send resources of data obtained after channel coding is performed on the TB, to be specific, resource abandonment criteria involved in sending of the data, need to be further designed. Similarly, how to determine a repeatedly-sent resource when the data obtained after channel coding is performed on the TB is repeatedly sent also needs to be further designed.

Refer to FIG. 13. A method provided in Embodiment 2 includes the following steps.

1301: A network device sends a slot format and PUSCH parameters to a terminal. Correspondingly, the terminal receives the slot format and the PUSCH parameters from the network device.

For related description of step 1301, refer to the foregoing step 801. A difference lies only in that time domain parameters do not need to include a number of repetitions. In some cases, the time domain parameters may not include an index corresponding to a start symbol S, a symbol quantity L, and $K_2$. For understanding, refer to description of step 801. Details are not described again. When the time domain parameters include the number of repetitions but do not include information indicating a quantity of slots, the number of repetitions may also be determined as the quantity of slots.

The PUSCH parameters may be carried in RRC and/or DCI.

The time domain parameters may include the information indicating the quantity of slots. Specifically, the quantity of slots may be indicated in the following three manners.

Manner 31: When a time domain resource allocation list (for example, the foregoing Table 1 or Table 2) is configured, a quantity of slots covered by a TB is additionally configured. For example, a new parameter is added for configuring a slot quantity N, and the parameter indicates to carry the TB over N slots. In this case, a value of N is indicated by the PUSCH parameters.

Manner 32: When a time domain resource allocation list (for example, the foregoing Table 1 or Table 2) is configured, L is configured as a sum of a quantity of symbols for sending in a start slot and 14*(N-1). In this case, L is denoted as L1 because L is different from that in conventional technologies. For example, one or more rows are added to Table 2 through a configuration, where each row indicates one L1. One S may be further configured in each row, to indicate a start symbol in the start slot. For example, if S=8 and L1=32, $N-1=\lfloor L1/14 \rfloor=2$, in other words, N=3; and a length of symbols for sending in the start slot is 32-14*(N-1)=4, in other words, 4 symbols starting from a start symbol S in the start slot are for sending data. In this case, L1 may be indicated by the PUSCH parameters, and a value of N is determined based on a symbol quantity L1 indicated by the PUSCH parameters.

Manner 33: When a time domain resource allocation list (for example, the foregoing Table 1 or Table 2) is configured, L is configured as a sum of a quantity of symbols for sending in a start slot and N-1. In this case, L is denoted as L1 because L is different from that in conventional technologies. For example, one or more rows are added to Table 2 through a configuration, where each row indicates one L1. One S may be further configured in each row, to indicate a start symbol in the start slot. In Manner 33, by default, symbols starting from a start symbol S in the start slot are all for sending. In this case, L1=(N-1)+(14-S), and N may be obtained through calculation through L1. For example, S=8, L1=8, and a quantity of the symbols for sending in the start slot is 14-S=6, in other words, 6 symbols starting from S in the start slot are for sending data, to obtain that N-1=L1-(14-S)=2. In this case, N=3. In this case, L1 may be indicated by the PUSCH parameters, and a value of N is determined based on a symbol quantity L1 indicated by the PUSCH parameters.

Compared with Manner 32 and Manner 33, a parameter needs to be additionally introduced to indicate N in Manner 31, and there is no need to introduce an additional parameter to indicate N in both Manner 32 and Manner 33, where N may be indicated through L1. In Manner 33, it is assumed that the symbols starting from the start symbol S in the start slot are all for sending. Therefore, a value range of L1 in Manner 33 is less than that of L1 in Manner 32, so that a specific quantity of bits can be reduced.

In addition, L1 in Manner 32 and Manner 33 may also indicate PUSCH resources for sending the data. For example, L1 in Manner 32 may indicate that L1-14*(N-1) symbols starting from the start symbol S in the start slot are for sending the data and available symbols in a second slot to an $N^{th}$ slot in the N slots are all for sending the data. L1 in Manner 33 may indicate that available symbols starting from the start symbol S in the start slot are all for sending the data and available symbols in a second slot to an $N^{th}$ slot in N slots are all for sending the data. It may be understood that, compared with directly indicating a symbol quantity of the PUSCH resources, quantities of bits required in Manner 32 and Manner 33 are less, so that a specific quantity of bits can be reduced.

During specific implementation of Manner 31 to Manner 33, the network device may send configuration information to the terminal, where the configuration information is for configuring the value of N (corresponding to Manner 31) or L1 (corresponding to Manner 32 or Manner 33), and the terminal determines the value of N or L1 based on the configuration information. A value configured in the configuration information may be a value configured in the corresponding manner.

1302: The terminal determines N slots based on the PUSCH parameters.

During specific implementation of step 1302, in some cases, the terminal needs to determine the N slots based on the PUSCH parameters and the slot format.

For a process in which the terminal determines the N slots, refer to Embodiment 1. Details are not described again. Alternatively, the N slots may be any one of Case (1) to Case (11) in Embodiment 1.

1303: The network device determines N slots based on the PUSCH parameters.

During specific implementation of step 1303, for understanding, refer to step 1302. A difference lies only in that the network device is described herein.

Step 1303 may be performed after step 1302, or may be performed before step 1302. This is not limited in this application.

1304: The terminal determines, based on slot formats of the N slots, whether to send data carried on a PUSCH in the N slots, where the data sent in the N slots is obtained by performing channel coding on a TB, and a TB size is determined based on available symbols in the N slots. In other words, the data is obtained by performing channel coding on the TB based on the available symbols in the N slots. The TBS may be determined based on information such as a quantity of the available symbols in the N slots, and a quantity of RBs for sending a PUSCH and a quantity of resources of a DMRS that are configured by the network device.

The data sent in the N slots may be data obtained after channel coding is performed on the TB based on all available symbols in the N slots, or may be data obtained after channel coding is performed on the TB based on some available symbols in the N slots. For details, refer to related description in Embodiment 1. Details are not described again.

During specific implementation, step 1304 may be implemented in the following manners.

Manner 41: The data is sent in the N slots when a first condition is satisfied; otherwise, it is determined that the data is not sent in the N slots. The first condition is that a start symbol of each slot in the N slots and symbols after the start symbol of each slot are all available symbols.

Manner 42: The data is sent in the N slots when a second condition is satisfied; otherwise, it is determined that the data is not sent in the N slots. The second condition is that symbols starting from a start symbol in a start slot in the N slots are all available symbols and symbols in other slots in the N slots are all available symbols (or the start symbol and N*14-S symbols after the start symbol).

Manner 43: The data is sent in a start slot when a third condition is satisfied; otherwise, it is determined that the data is not sent in the start slot. The data is sent in an $i^{th}$ slot when a fourth condition is satisfied; otherwise, it is determined that the data is not sent in the $i^{th}$ slot, where a value of i is 2, ..., or N. S is an index of a start symbol, and S is indicated by the PUSCH parameters. The third condition is that symbols starting from the start symbol in the start slot in the N slots are all available symbols. The fourth condition is that symbols in the $i^{th}$ slot in the N slots are all available symbols.

Manner 44: The data is sent in an $i^{th}$ slot when a fifth condition is satisfied; otherwise, it is determined that the data is not sent in the $i^{th}$ slot, where a value of i is 1, 2, ..., or N. The fifth condition is that a quantity of available symbols in the $i^{th}$ slot in the N slots is greater than or equal to a third threshold. "Greater than or equal to" in the fifth condition may also be replaced with "greater than".

Manner 45: The data is sent in an $i^{th}$ slot when a sixth condition is satisfied; otherwise, it is determined that the data is not sent in the $i^{th}$ slot, where a value of i is 1, 2, ..., or N. The sixth condition is that there are available symbols in the $i^{th}$ slot in the N slots.

In Manner 41 to Manner 45, Manner 41 and Manner 42 are multi-slot-level rules, Manner 43 and Manner 44 are single-slot-level rules, and Manner 45 is a symbol-level rule. It should be noted that, for any manner in Manner 41 to Manner 45, if the terminal has determined, in a process of determining the N slots, that the N slots satisfy a condition corresponding to a corresponding manner, the terminal does not need to determine the corresponding condition before sending the data.

Optionally, in the foregoing Manner 41 to Manner 45, the terminal may also send the data when a condition corresponding to a corresponding manner is satisfied and it is satisfied that a total quantity of the available symbols in the N slots is greater than or equal to (greater than or equal to herein may also be replaced with greater than) an eighth threshold. The third threshold and/or the eighth threshold may be preset, or specified in a protocol, or determined by the network device and the terminal through negotiation. This is not limited in this application. It may be understood that, if the terminal sends the data when a specific condition is satisfied, the network device also receives the data when the condition is satisfied. To avoid repetition, details are not described again.

The conditions in Manner 41 to Manner 45 may also be for determining the PUSCH resources. When the condition in Manner 41, Manner 42, or Manner 43 is satisfied, the data is sent in L symbols starting from a start symbol S in each slot, or the data is sent in all available symbols in each slot, or the data is sent in L symbols starting from a start symbol S in a start slot and available symbols in other slots in the N slots, or the data is sent in all available symbols starting from a start symbol S in a start slot and available symbols in other slots in the N slots. When the condition in Manner 44 or Manner 45 is satisfied, if L symbols starting from a start symbol S in a slot are all available symbols, the data is sent in the L symbols starting from the start symbol S in the slot, or the data is sent in all available symbols in the slot; and if there is no unavailable symbol in the L symbols starting from the start symbol S in the slot, the data may be sent in all the available symbols in the slot.

Optionally, if in each condition, S=0 or S is not configured, it may be considered that when 14 symbols in each slot in the N slots are all available symbols, the symbols may be for sending the data.

1305: The network device determines, based on slot formats of the N slots, whether to receive data carried on a PUSCH in the N slots, where the data sent in the N slots is obtained by performing channel coding on a TB, and a TB size is determined based on available symbols in the N slots.

Embodiment 2 further provides a method for determining a start slot for repeatedly sending the data. Optionally, there are the following several cases.

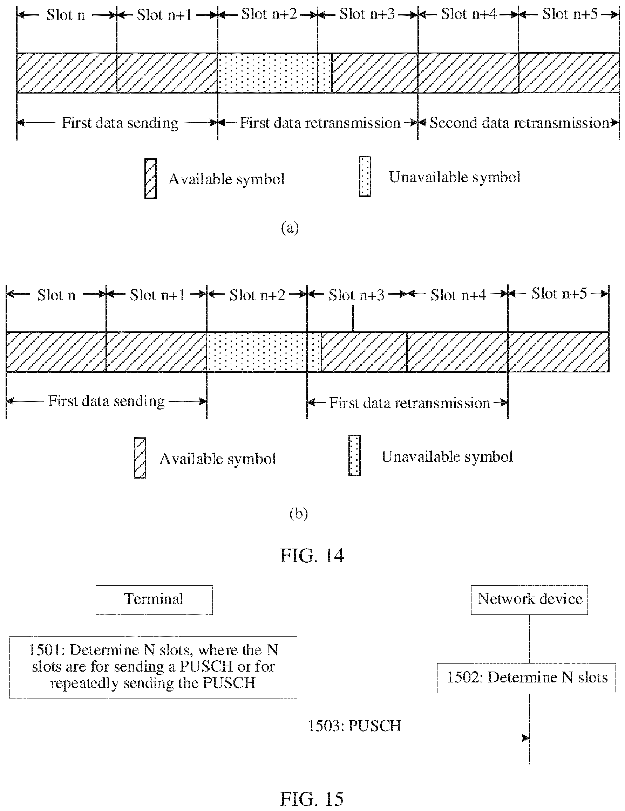

Case 1: A first slot after the N slots is a start slot for repeatedly sending the data. For example, refer to (a) in FIG. 14. If N=2, first sending of the data covers two slots to a slot n+1 starting from a slot n, retransmission covers two slots to a slot n+3 starting from a slot n+2, and another retransmission covers two slots to a slot n+5 starting from a slot n+4.

Case 2: A first slot in which there are available symbols after the N slots is a start slot for repeatedly sending the data. For example, refer to (b) in FIG. 14. If N=2, first sending covers two slots to a slot n+1 starting from a slot n, and retransmission covers two slots to a slot n+4 starting from next slot in which there are available symbols, namely, a slot n+3. Because a slot n+2 is a downlink slot and has no uplink symbol, the slot n+2 is not used as a start slot for the retransmission.

Case 3: A first slot in which a symbol quantity of included available symbols is greater than or equal to (greater than or equal to herein may also be replaced with greater than) a fourth threshold after the N slots is a start slot for repeatedly sending the data. The fourth threshold may be preset, or specified in a protocol, or determined by the network device and the terminal through negotiation. This is not limited in this application.

Case 4: A first slot in which L symbols starting from a start symbol are all available symbols after the N slots is a start slot for repeatedly sending the data. In the method provided in Embodiment 2, a problem of determining, when one TB spans a plurality of slots, resources for sending data obtained after channel coding is performed on the TB, a problem of how to indicate, with low overheads, a quantity of symbols of PUSCH resources or a quantity of the slots spanned by one TB, and the like are resolved, so that a solution of carrying one TB over a plurality of slots can be implemented.

In the method shown in Embodiment 2, optionally, whether to send the data in a frequency hopping manner in each slot in the N slots is determined based on a quantity of available symbols in the slot. Correspondingly, whether to receive the data in a frequency hopping manner in each slot in the N slots is determined based on a quantity of available symbols in the slot. Specific implementation of the optional method is similar to that of step 805, and a first resource in step 805 is replaced with the available symbols in the slot for understanding. Details are not described again.

In the method shown in Embodiment 2, optionally, a frequency domain position corresponding to slots in a first time window in the N slots is a first frequency domain position, and a frequency domain position corresponding to slots in a second time window is a second frequency domain position. The first time window and the second time window are adjacent time windows in time domain. The first frequency domain position is different from the second frequency domain position. There may be two or more time windows in the N slots.

A size of a time window may be configured by the network device for the terminal through RRC signaling, and the size of the time window is related to a channel characteristic. For example, the time window may include K slots. In this case, when data is sent in a slot for carrying a PUSCH in the K slots, the data is located in a same frequency domain position. K may be an integer greater than 1. In the optional method, because channel characteristics in a plurality of slots are generally correlated, inter-slot frequency hopping is measured in time windows, so that channel detection performance can be improved.

In the method provided in Embodiment 2, the terminal determines the N slots based on the PUSCH parameters, and determines, based on the slot formats of the N slots, whether to send the data carried on the PUSCH in the N slots. In this way, when the data carried on the PUSCH can be sent in the N slots, the PUSCH is sent in the N slots, to carry one TB over a plurality of slots. In addition, Embodiment 2 further provides a method for indicating the quantity of symbols of the PUSCH resources with low overheads, a method for determining the PUSCH resources for sending the data, and a method for determining the start slot for repeatedly sending the data, so that implementation of the solution of carrying one TB over a plurality of slots is ensured.

If the solutions in Embodiment 1 and Embodiment 2 are used as an entire solution, it may be considered that the terminal and/or the network device determines first information based on the slot format and the PUSCH parameters. The first information is the first resource in the first slot in Embodiment 1 or the N slots in Embodiment 2. If it is determined that the first information is the first resource in the first slot in Embodiment 1, for a specific implementation process of the solution provided in this application, refer to Embodiment 1. If it is determined that the first information is the N slots in Embodiment 2, for a specific implementation process of the solution provided in this application, refer to Embodiment 2.

**Embodiment 3**

Refer to FIG. 15. A method provided in Embodiment 3 includes the following steps.

1501: A terminal determines N slots, where the N slots are for sending a PUSCH or for repeatedly sending the PUSCH.

For specific implementation of step 1501, refer to Embodiment 1. Details are not described again. The N slots may be any one of Case (1) to Case (11) in Embodiment 1.

Before step 1501, the method may further include the foregoing step 1301, so that the terminal performs step 1501.

1502: A network device determines N slots.

During specific implementation of step 1502, for understanding, refer to step 1501. A difference lies only in that the network device is described herein.

1503: The terminal sends the PUSCH or repeatedly sends the PUSCH in the N slots. Correspondingly, the network device receives the PUSCH or receives repetitions of the PUSCH in the N slots.

For explanation of related concepts and implementation of related steps in Embodiment 3, refer to Embodiment 1 and Embodiment 2. To avoid repetition, details are not described herein again.

In the method provided in Embodiment 3, when a coverage range of the PUSCH is improved by carrying one TB over a plurality of slots or repeatedly sending the PUSCH in a plurality of slots, the plurality of slots may be determined, so that the solutions can be successfully implemented.

The embodiments mentioned above in this application may be combined when the solutions do not conflict. This is not limited. There may be downlink slots between slots (for example, a slot n+2 and a slot n+3 in FIG. 1) shown in the accompanying drawings of this application. Because this application does not involve sending data in the downlink slots, this is not shown in the accompanying drawings. However, it should be understood that, each slot shown in the accompanying drawings of this application is an example, and does not constitute a limitation on a slot format and a slot position during actual implementation. When PUSCH parameters in the foregoing embodiments of this application indicate a start symbol S, a symbol quantity L, and $K_2$, the PUSCH parameters may not indicate an index, but directly indicate one or more of the start symbol S, the symbol quantity L, and $K_2$. This is not limited in this application.

A summary of main invention points of this application is as follows.

This application provides an enhancement method for PUSCH Type A-manner repeated transmission.

Embodiment 1: In a Type A enhancement solution in 1 slot, available resource abandonment criteria are designed based on whether to perform frequency hopping, or whether to perform frequency hopping is determined based on a quantity of available resources.

Embodiment 2: In a Type A repeated transmission solution for one TB over a plurality of slots, abandonment criteria are designed, and granularities include a multi-slot level, a slot level, a symbol level, and the like.

Embodiment 3: When the enhancement solutions in Embodiment 1 and Embodiment 2 are indicated, a new TDRA table is configured. A new TimeDomainAllocationList is configured during RRC configuration. After signaling is configured at a higher layer, a row of the new TimeDomainAllocationList is indicated in DCI. A difference lies in that L>14, and a meaning of L is defined.

Embodiment 1 of this application: Association between available resources and intra-slot frequency hopping.

Core Ideas: A lower limit of the available resources is obtained based on whether to perform frequency hopping, to be used for the abandonment criteria. Alternatively, whether to perform frequency hopping during PUSCH transmission is determined based on a symbol quantity of the available resources.

Available symbols: including uplink symbols and some flexible symbols, but not including downlink symbols and symbol for downlink-to-uplink conversion after the downlink symbols.

Criterion 1: When intra-slot frequency hopping is not configured, if L available symbols starting from a start symbol (S) are greater than or equal to Y1, the PUSCH is transmitted in a slot. When intra-slot frequency hopping is configured, if L available symbols starting from a start symbol (S) are greater than or equal to Y2, the PUSCH is transmitted in a slot. Y2>Y1.

Optionally, Y2=Y1+a quantity of symbols of a DMRS. For example, if a single-symbol DMRS is configured and there is no additional DMRS, Y2=Y1+1. If a dual-symbol DMRS is configured and there is no additional DMRS, Y2=Y1+2. If a single-symbol DMRS is configured and there is one additional DMRS, Y2=Y1+2. If a dual-symbol DMRS is configured and there is an additional DMRS, Y2=Y1+4.

Criterion 2: When a symbol quantity L of the PUSCH is configured and intra-slot frequency hopping is configured, if a quantity of available symbols in a slot is less than a threshold X, intra-slot frequency hopping is not enabled, in other words, intra-slot frequency hopping is not performed when the PUSCH is transmitted in the slot. If the quantity of available symbols in the slot is greater than or equal to the threshold X, intra-slot frequency hopping is enabled when the PUSCH is transmitted in the slot.

Optionally, the threshold X is related to L, for example, $X = \lfloor L/2 \rfloor$, or $X = \lfloor L/2 \rfloor + 1$, or $X = \lfloor L/2 \rfloor - 1$. A specific threshold may be carried on configuration signaling such as RRC or indication signaling such as DCI, to notify a terminal.

In addition to whether frequency hopping is enabled, a secondary invention point of Embodiment 1 lies in determining a DMRS position. In a conventional Type A repetition, a parameter dmrs-TypeA-Position is for configuring that a third (pos2) or fourth (pos3) symbol in an entire slot carries a DMRS. Because first several symbols in a special slot may be downlink symbols, this configuration is not applicable. Therefore, a position of the DMRS needs to be redefined.

Manner 1: pos2 or pos3 indicates a third or fourth symbol of the PUSCH.

Manner 2: pos2 or pos3 indicates a first or second symbol, or a second or third symbol of the PUSCH.

Manner 3: pos2 or pos3 indicates a third last or fourth last symbol of the PUSCH.

Technical effects of Embodiment 1 of this application: In the solution provided in this application, an association relationship between intra-slot frequency hopping and available resources is provided, and whether to perform intra-slot frequency hopping is determined through the available resources, or a lower limit of the available resources that carry a PUSCH is determined based on whether to perform intra-slot frequency hopping.

An improvement in Embodiment 1 of this application that differs from conventional technologies is as follows: Compared with a Type A manner in the conventional technologies, the solution provided in this application has a more flexible requirement on resources, but is still limited to 1 slot. Compared with a Type B manner, a problem of scattered resources caused by spanning slots is reduced.

Embodiment 2 of this application: Repetition abandonment criteria for that one TB covers a plurality of slots.

Core ideas: Abandonment criteria for that one TB covers N slots for repetition are provided, including a multi-slot level, a single-slot level, and a symbol level, to provide a method for determining available resources (where N>1). It should be noted that, these abandonment criteria may also be for determining the available resources when one TB covers the N slots.

When one TB covers the N slots (where N>1), determining of the resources includes the following two parts: One part is a position of a start slot, and the other part is symbols included in available resources in a plurality of slots starting from the start slot.

First, the start slot is determined.

For first transmission, the position of the start slot of the first transmission is obtained based on a slot in which indication information of DCI is and a quantity of spacing slots indicated in RRC or the DCI. For subsequent retransmission, the start slot is determined in the following two manners.

A first manner is similar to Type A. A first slot after last transmission is denoted as the start slot.

A second manner is similar to Type B. After last transmission, for a first slot in which there are available symbols or the slot that is a first slot that may carry a PUSCH, the slot is denoted as the start slot (recommended).

For example, as shown in (a) in FIG. 14 and (b) in FIG. 14, in the first manner (corresponding to (a) in FIG. 14), first transmission covers two slots to a slot n+1 starting from a slot n, retransmission covers two slots to a slot n+3 starting from a slot n+2, and another retransmission covers two slots to a slot n+5 starting from a slot n+4. In the second manner (corresponding to (b) in FIG. 14), first transmission covers two slots to a slot n+1 starting from a slot n, and retransmission covers two slots to a slot n+4 starting from next slot in which there are available resources, namely, a slot n+3. Because a slot n+2 is a downlink slot and has no uplink symbol, the slot n+2 is not used as a start slot for the retransmission.

After a range of the N slots covered by each transmission is determined, the available resources in the N slots are further determined.

Manner 1: Multi-slot-level abandonment criterion

When the N slots do not satisfy that a start symbol S in a first slot is an available symbol, and symbols after the symbol S are all available symbols or N*14-S symbols after the S symbol are all available symbols, repeated transmission of the PUSCH is abandoned. If S=0 or S is not configured, the repeated transmission of the PUSCH can be carried only when 14 symbols in each slot in the N slots are all available symbols.

Manner 2: Single-slot-level abandonment criterion

Transmission is performed only when a symbol S in a start slot is an available symbol and 14-S symbols after the symbol S in the slot are available symbols; and transmission is performed only when 14 symbols in a slot after the start slot are all available symbols.

If S=0 or S is not configured, each slot is determined as a transmission resource based on a standard that 14 symbols are all available symbols.

Manner 3: Symbol-level abandonment criterion

Other than downlink symbols and flexible symbols for transmission/reception conversion after the downlink symbols, other symbols are included in available symbols for transmitting the PUSCH.

Technical effects of Embodiment 2 of this application: The solution provided in this application provides a resource determining method when one TB covers a plurality of slots, including determining of a start slot, determining of a resource in a slot, and the like.

An improvement in Embodiment 2 of this application that differs from conventional technologies/Embodiment 1: In the conventional technologies, there is no available resource method when one TB covers a plurality of slots, and this embodiment completes this defect.

Embodiment 3 of this application: An indication of an enhancement method.

Core ideas: S and L are configured by using a TDRA table in conventional technologies. However, that are not applicable to both Embodiment 1 and Embodiment 2 because S is no longer 0 in a special slot in Embodiment 1 and L is no longer limited to 14 symbols in Embodiment 2. In this embodiment, a new TDRA table is configured to be respectively applicable to the foregoing two embodiments.

A PUSCH configuration table in 38.331 is as follows:

```
PUSCH-Allocation-r16 ::=     SEQUENCE {

         mappingType-r16                          ENUMERATED  {typeA, typeB}
OPTIONAL,      -- Cond NotFormat01-02-Or-TypeA

         startSymbolAndLength-r16                 INTEGER    (0..127)
OPTIONAL,      -- Cond NotFormat01-02-Or-TypeA

         startSymbol-r16                          INTEGER   (0..13)
OPTIONAL,      -- Cond RepTypeB

         length-r16                               INTEGER   (1..14)
OPTIONAL,      -- Cond RepTypeB

         numberOfRepetitions-r16      ENUMERATED {n1, n2, n3, n4, n7, n8, n12, n16}
OPTIONAL,      -- Cond Format01-02

         …

            }
```

Indication method of Embodiment 1:

For the solution in Embodiment 1, in Manner 1, when an RRC table is configured, a start symbol and/or a symbol length used for a special slot are/is additionally configured, for example, startSymbol_special_slot or length_special_slot is added, to indicate a resource position for carrying a PUSCH in the special slot.

When only startSymbol_special_slot is configured, it indicates that all uplink or flexible symbols starting from startSymbol_special_slot are for transmitting the PUSCH. When only length_special_slot is configured, it indicates that length_special_slot symbols that start from a symbol corresponding to 14-length_special_slot and last for length_special_slot to a slot end position are for carrying the PUSCH. When both startSymbol_special_slot and length_special_slot are configured, it indicates that length_special_slot symbols starting from startSymbol_special slot are for carrying the PUSCH.

For the solution in Embodiment 1, in another configuration manner 2, when a repetition manner is Type A, startSymbol2 and length2 are configured. In this case, startSymbol2 is a start symbol in a slot, and a continuous symbol length in the slot is min(length2-startSymbol2, 14). Remaining length2-min(length2-startSymbol2, 14) is a symbol length in a special slot, in other words, a start position starts from a tail of the special slot and length2-min(length2-startSymbol2, 14) symbols before the start position are included.

For the solution in Embodiment 1, there is still another configuration manner 3. startSymbol3 indicates a position of a start symbol in a special slot, and L is identified as a symbol length of the special slot plus a quantity of uplink symbols in next slot. For example, if startSymbol3=10 and L=4+14=18, in remaining UL slots, UE understands that startSymbol=0 and L=14, and transmits a PUSCH in a first slot by using that startSymbol3=10 and L=4. If startSymbol3=12 and L=2+14=18, in remaining UL slots, UE understands that startSymbol=0 and L=14, and performs first transmission in a first slot by using that start=12 and L=2.

Indication method of Embodiment 2:

For the solution in Embodiment 2, in Manner a, when an RRC table is configured, a quantity of covered slots is additionally configured. For example, a new parameter, namely, a slot quantity N, is added for indicating to carry one TB over N slots.

For the solution in Embodiment 2, in another Manner b, when an RRC table is configured, L is configured as a quantity of symbols starting from S in a start slot plus 14*(N-1), where N refers to carrying one TB over N slots.

For example, if S=8 and L=32, that $N-1 = \lfloor L/14 \rfloor = 2$, that is, N=3, is obtained; and a symbol length in a first slot is 32-14*(N-1)=4, in other words, 4 symbols starting from S in the first slot carry a PUSCH.

For the solution in Embodiment 2, there is another indication manner c. When an RRC table is configured, L is configured as a quantity of symbols starting from S in a start slot plus (N-1), where N refers to carrying one TB over N slots. Because a position of a start symbol in a first slot is known by using S and symbols starting from S in the first slot are all for carrying a PUSCH, a quantity of available symbols in the first slot is obtained as 14-S, so that a value of (N-1) is obtained based on L, in other words, a quantity N of slots covered by one TB may be known.

For example, if S=8 and L=8, a symbol length in the first slot is 14-S=6, in other words, 6 symbols starting from S in the first slot carry the PUSCH, to obtain that N-1=L-(14-S)=2, that is, N=3.

It can be learned that, a parameter needs to be additionally introduced in Manner a, and there is no need to introduce a new parameter in Manner b and Manner c. However, in Manner c, it is assumed that the symbols starting from S in the first slot are all available resources. Therefore, a value range of L in Manner c is less than that in Manner b, so that a specific quantity of bits can be reduced.

Technical effects of Embodiment 3 of this application: The solution provided in this application provides how to indicate a resource position occupied by PUSCH transmission in Embodiment 1 and Embodiment 2.

An improvement in Embodiment 3 of this application that differs from conventional technologies/Embodiment 1: Compared with the conventional technologies, Embodiment 3 provides an indication or calculation method for a special slot and/or an indication or calculation method for N when one TB covers N slots.

The foregoing mainly describes the solutions in embodiments of this application from a perspective of a method. It may be understood that, to implement the foregoing functions, each network element, for example, a terminal or a network device, includes at least one of a corresponding hardware structure or a corresponding software module for performing each function. A person skilled in the art should easily be aware that, in combination with units and algorithm steps of the examples described in embodiments disclosed in this specification, this application may be implemented by hardware or a combination of hardware and computer software. Whether a function is performed by hardware or hardware driven by computer software depends on particular applications and design constraints of the technical solutions. A person skilled in the art may use different methods to implement the described functions for each specific application. However, it should not be considered that the implementation goes beyond the scope of this application.

In embodiments of this application, the terminal and the network device may be divided into functional units based on the foregoing method examples. For example, each functional unit may be obtained through division based on each corresponding function, or two or more functions may be integrated into one processing unit. The integrated unit may be implemented in a form of hardware, or may be implemented in a form of a software functional unit. It should be noted that, in embodiments of this application, division into the units is an example, and is merely a logical function division. In actual implementation, another division manner may be used.

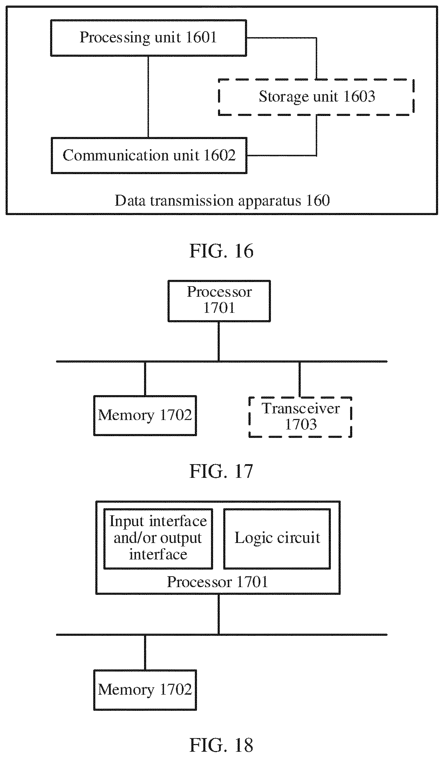

For example, FIG. 16 is a possible schematic structural diagram of a data transmission apparatus (denoted as a data transmission apparatus 160) in the foregoing embodiments. The data transmission apparatus 160 includes a processing unit 1601 and a communication unit 1602. Optionally, the apparatus further includes a storage unit 1603. The data transmission apparatus 160 may be configured to show structures of the terminal and the network device in the foregoing embodiments.

When the data transmission apparatus 160 is configured to show a structure of the terminal in the foregoing embodiments, the processing unit 1601 is configured to control and manage actions of the terminal. For example, the processing unit 1601 is configured to perform 801, 802, and 804 in FIG. 8, 1301, 1302, and 1304 in FIG. 13, and 1501 and 1503 in FIG. 15, and/or actions performed by the terminal in another process described in embodiments of this application. The processing unit 1601 may communicate with another network entity through the communication unit 1602, for example, communicate with the network device in FIG. 8. The storage unit 1603 is configured to store program code and data that are of the terminal.

When the data transmission apparatus 160 is configured to show a structure of the network device in the foregoing embodiments, the processing unit 1601 is configured to control and manage actions of the network device. For example, the processing unit 1601 is configured to perform 801, 803, and 805 in FIG. 8, 1301, 1303, and 1305 in FIG. 13, and 1502 and 1503 in FIG. 15, and/or actions performed by the network device in another process described in embodiments of this application. The processing unit 1601 may communicate with another network entity through the communication unit 1602, for example, communicate with the terminal in FIG. 8. The storage unit 1603 is configured to store program code and data that are of the network device.

For example, the data transmission apparatus 160 may be a device, or may be a chip or a chip system.

When the data transmission apparatus 160 is a device, the processing unit 1601 may be a processor; and the communication unit 1602 may be a communication interface, a transceiver, or an input interface and/or an output interface. Optionally, the transceiver may be a transceiver circuit. Optionally, the input interface may be an input circuit, and the output interface may be an output circuit.

When the data transmission apparatus 160 is a chip or a chip system, the communication unit 1602 may be a communication interface, an input interface and/or an output interface, an interface circuit, an output circuit, an input circuit, a pin, a related circuit, or the like on the chip or the chip system. The processing unit 1601 may be a processor, a processing circuit, a logic circuit, or the like.

When an integrated unit in FIG. 16 is implemented in a form of a software function module and sold or used as an independent product, the integrated unit may be stored in a computer-readable storage medium. Based on such an understanding, the technical solutions of embodiments of this application essentially, or the part contributing to conventional technologies, or all or some of the technical solutions may be implemented in the form of a software product. The computer software product is stored in a storage medium and includes several instructions for instructing a computer device (which may be a personal computer, a server, or a network device) or a processor (processor) to perform all or some of the steps of the methods described in embodiments of this application. A storage medium for storing the computer software product includes any medium that can store program code, such as a USB flash drive, a removable hard disk, a read-only memory (read-only memory, ROM), a random access memory (random access memory, RAM), a magnetic disk, or an optical disc.

An embodiment of this application further provides a schematic diagram of a hardware structure of a data transmission apparatus. Refer to FIG. 17 or FIG. 18, the data transmission apparatus includes a processor 1701, and optionally, further includes a memory 1702 connected to the processor 1701.

The processor 1701 may be a general-purpose central processing unit (central processing unit, CPU), a microprocessor, an application-specific integrated circuit (application-specific integrated circuit, ASIC), or one or more integrated circuits configured to control program execution of the solutions of this application. The processor 1701 may alternatively include a plurality of CPUs, and the processor 1701 may be a single-core (single-CPU) processor or a multi-core (multi-CPU) processor. The processor herein may be one or more devices, circuits, or processing cores configured to process data (for example, computer computer-executable instructions).

The memory 1702 may be a ROM or another type of static storage device that can store static information and computer-executable instructions, a RAM or another type of dynamic storage device that can store information and computer-executable instructions. The memory 1702 may alternatively be an electrically erasable programmable read-only memory (electrically erasable programmable read-only memory, EEPROM), a compact disc read-only memory (compact disc read-only memory, CD-ROM) or another compact disc storage, optical disc storage (including a compact disc, a laser disc, an optical disc, a digital versatile disc, a Blu-ray disc, or the like), or a magnetic disk storage medium or another magnetic storage device, or any other medium that can be used to carry or store expected program code in a form of instructions or a data structure and that is accessible by a computer. This is not limited in embodiments of this application. The memory 1702 may independently exist (where in this case, the memory 1702 may be located outside the data transmission apparatus, or may be located inside the data transmission apparatus), or may be integrated with the processor 1701. The memory 1702 may include computer program code. The processor 1701 is configured to execute the computer program code stored in the memory 1702, to implement the method provided in embodiments of this application.

In a first possible implementation, refer to FIG. 17. The data transmission apparatus further includes a transceiver 1703. The processor 1701, the memory 1702, and the transceiver 1703 are connected through a bus. The transceiver 1703 is configured to communicate with another device or a communication network. Optionally, the transceiver 1703 may include a transmitter and a receiver. A component configured to implement a receiving function in the transceiver 1703 may be considered as a receiver. The receiver is configured to perform a receiving step in embodiments of this application. A component configured to implement a sending function in the transceiver 1703 may be considered as a transmitter. The transmitter is configured to perform a sending step in embodiments of this application.

Based on the first possible implementation, a schematic diagram of a structure shown in FIG. 17 may be used to show structures of the terminal and the network device in the foregoing embodiments.

When the schematic diagram of the structure shown in FIG. 17 is used to show a structure of the terminal in the foregoing embodiments, the processor 1701 is configured to control and manage actions of the terminal. For example, the processor 1701 is configured to perform 801, 802, and 804 in FIG. 8, 1301, 1302, and 1304 in FIG. 13, and 1501 and 1503 in FIG. 15, and/or actions performed by the terminal in another process described in embodiments of this application. The processor 1701 may communicate with another network entity through the transceiver 1703, for example, communicate with the network device in FIG. 8. The memory 1702 is configured to store program code and data that are of the terminal.

When the schematic diagram of the structure shown in FIG. 17 is used to show a structure of the network device in the foregoing embodiments, the processor 1701 is configured to control and manage actions of the network device. For example, the processor 1701 is configured to perform 801, 803, and 805 in FIG. 8, 1301, 1303, and 1305 in FIG. 13, and 1502 and 1503 in FIG. 15, and/or actions performed by the network device in another process described in embodiments of this application. The processor 1701 may communicate with another network entity through the transceiver 1703, for example, communicate with the terminal in FIG. 8. The memory 1702 is configured to store program code and data that are of the network device.

In a second possible implementation, the processor 1701 includes a logic circuit, and an input interface and/or an output interface. For example, the output interface is configured to perform a sending action in a corresponding method, and the input interface is configured to perform a receiving action in the corresponding method. Based on the second possible implementation, refer to FIG. 18. A schematic diagram of a structure shown in FIG. 18 may be used to show structures of the terminal and the network device in the foregoing embodiments.

When the schematic diagram of the structure shown in FIG. 18 is used to show a structure of the terminal in the foregoing embodiments, the processor 1701 is configured to control and manage actions of the terminal. For example, the processor 1701 is configured to perform 801, 802, and 804 in FIG. 8, 1301, 1302, and 1304 in FIG. 13, and 1501 and 1503 in FIG. 15, and/or actions performed by the terminal in another process described in embodiments of this application. The processor 1701 may communicate with another network entity through the input interface and/or the output interface, for example, communicate with the network device in FIG. 8. The memory 1702 is configured to store program code and data that are of the terminal.

When the schematic diagram of the structure shown in FIG. 18 is used to show a structure of the network device in the foregoing embodiments, the processor 1701 is configured to control and manage actions of the network device. For example, the processor 1701 is configured to perform 801, 803, and 805 in FIG. 8, 1301, 1303, and 1305 in FIG. 13, and 1502 and 1503 in FIG. 15, and/or actions performed by the network device in another process described in embodiments of this application. The processor 1701 may communicate with another network entity through the input interface and/or the output interface, for example, communicate with the terminal in FIG. 8. The memory 1702 is configured to store program code and data that are of the network device.

In an implementation process, the steps in the method provided in this embodiment may be completed by using a hardware integrated logic circuit in the processor, or by using instructions in a form of software. The steps of the method disclosed with reference to embodiments of this application may be directly performed by a hardware processor, or may be performed by using a combination of hardware in the processor and a software module.

An embodiment of this application further provides a computer-readable storage medium, including computer-executable instructions. When the computer-executable instructions are run on a computer, the computer is enabled to perform any one of the foregoing methods.

An embodiment of this application further provides a computer program product including computer-executable instructions. When the computer-executable instructions are run on a computer, the computer is enabled to perform any one of the foregoing methods.

An embodiment of this application further provides a communication system, including a network device and a terminal in the foregoing embodiments.

An embodiment of this application further provides a chip, including a processor and an interface. The processor is coupled to a memory through the interface, and when the processor executes computer-executable programs or computer-executable instructions in the memory, any method provided in the foregoing embodiments is performed.

The computer-executable instructions in this application may also be referred to as instructions, computer instructions, computer programs, or the like.

All or some of the foregoing embodiments may be implemented by using software, hardware, firmware, or any combination thereof. When a software program is used to implement embodiments, embodiments may be implemented entirely or partially in a form of a computer program product. The computer program product includes one or more computer-executable instructions. When the computer-executable instructions are loaded and executed on the computer, the procedure or functions in embodiments of this application are all or partially generated. The computer may be a general-purpose computer, a dedicated computer, a computer network, or other programmable apparatuses. The computer-executable instructions may be stored in a computer-readable storage medium, or transmitted from one computer-readable storage medium to another computer-readable storage medium. For example, the computer-executable instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a DVD), a semiconductor medium (for example, a solid state disk (solid state disk, SSD)), or the like.

Although this application is described with reference to embodiments, in a process of implementing this application that claims protection, persons skilled in the art may understand and implement another variation of the disclosed embodiments by viewing the accompanying drawings, disclosed content, and the accompanying claims. In the claims, "comprising" (comprising) does not exclude another component or another step, and "a" or "one" does not exclude a case of plurality. A single processor or another unit may implement several functions enumerated in the claims. Some measures are recorded in dependent claims that are different from each other, but this does not mean that these measures cannot be combined to produce a better effect.

Although this application is described with reference to specific features and embodiments thereof, obviously, various modifications and combinations may be made to them without departing from the spirit and scope of this application. Correspondingly, the specification and accompanying drawings are merely examples of description of this application defined by the accompanying claims, and is considered as any of or all modifications, variations, combinations or equivalents that cover the scope of this application. Certainly, a person skilled in the art can make various modifications and variations to this application without departing from the spirit and scope of this application. In this case, if the modifications and variations made to this application fall within the scope of the claims of this application and their equivalent technologies, this application is intended to include these modifications and variations.

**Claims**

1. A data transmission method, comprising:

   receiving a slot format and physical uplink shared channel PUSCH parameters from a network device;
   determining first information based on the slot format and the PUSCH parameters, wherein the first information is a first resource in a first slot or N slots, the first resource is formed by available symbols, and N is an integer greater than 1; and
   determining, based on a quantity of the available symbols in the first resource, whether to send a PUSCH in a frequency hopping manner in the first resource when the first information is the first resource in the first slot; or
   determining, based on slot formats of the N slots when the first information is the N slots, whether to send data carried on a PUSCH in the N slots, wherein the data sent in the N slots is obtained by performing channel coding on a transport block TB, and a TB size is determined based on available symbols in the N slots.

2. The method according to claim 1, wherein the first information is the first resource in the first slot.

3. The method according to claim 2, wherein the first resource does not comprise a downlink symbol and a flexible symbol for downlink-to-uplink conversion.

4. The method according to claim 2 or 3, wherein the determining, based on a quantity of the available symbols in the first resource, whether to send a PUSCH in a frequency hopping manner in the first resource comprises:

   sending the PUSCH in the frequency hopping manner in the first resource when the quantity of the available symbols in the first resource is greater than or equal to a first threshold; and
   sending the PUSCH in a non-frequency hopping manner in the first resource when the quantity of the available symbols in the first resource is less than a second threshold, wherein the second threshold is less than or equal to the first threshold.

5. The method according to claim 4, wherein sending the PUSCH in the frequency hopping manner is configured in the PUSCH parameters.

6. The method according to claim 4 or 5, wherein the PUSCH parameters indicate a quantity of symbols of the PUSCH and/or a quantity of symbols occupied by a de-modulation reference signal DMRS, and the first threshold and/or the second threshold are/is related to the quantity of the symbols of the PUSCH and/or the quantity of the symbols occupied by the DMRS.

7. The method according to any one of claims 2 to 6, wherein the method further comprises:
   receiving first indication information, wherein the first indication information indicates a DMRS position in the first resource; and the DMRS position is one or more symbols in a first available symbol to a fourth available symbol in the first resource, or the DMRS position is a third last symbol and/or a fourth last symbol in the first resource.

8. The method according to any one of claims 2 to 7, wherein the first slot is a special slot, and the PUSCH parameters indicate a start symbol and/or a symbol quantity corresponding to the special slot.

9. The method according to any one of claims 2 to 8, wherein the first slot is one of the N slots, and the N slots are for sending the PUSCH or for repeatedly sending the PUSCH; and the N slots are N consecutive slots that start from a start slot, or the N slots are N slots that start from a start slot and do not comprise a downlink slot, or the N slots are N slots that start from a start slot and do not comprise a downlink slot or a special slot, or the N slots are N uplink slots that start from a start slot, or the N slots are N slots that start from a start slot and satisfy that symbols starting from a start symbol S in each slot are all available symbols, or the N slots are N slots that start from a start slot and satisfy that L symbols starting from a start symbol S in each slot are all available symbols, wherein the start slot is a first slot for sending the PUSCH or for repeatedly sending the PUSCH, and N is an integer greater than 1.

10. The method according to claim 1, wherein the first information is the N slots.

11. The method according to claim 10, wherein the determining, based on slot formats of the N slots, whether to send data carried on a PUSCH in the N slots comprises:
sending the data in the N slots when a start symbol of each slot in the N slots and symbols after the start symbol of each slot are all available symbols.

12. The method according to claim 10, wherein the determining, based on slot formats of the N slots, whether to send data carried on a PUSCH in the N slots comprises:
sending the data in the N slots when symbols starting from a start symbol in a start slot in the N slots are all available symbols and symbols in other slots in the N slots are all available symbols.

13. The method according to claim 10, wherein the determining, based on slot formats of the N slots, whether to send data carried on a PUSCH in the N slots comprises:

sending, when symbols starting from a start symbol in a start slot in the N slots are all available symbols, the data in the start slot; and
sending, when symbols in an $i^{th}$ slot in the N slots are all available symbols, the data in the $i^{th}$ slot, wherein a value of i is 2, ..., or N.

14. The method according to claim 10, wherein the determining, based on slot formats of the N slots, whether to send data carried on a PUSCH in the N slots comprises:
sending, when there are available symbols in an $i^{th}$ slot in the N slots, the data in the $i^{th}$ slot, wherein a value of i is 1, 2, ..., or N.

15. The method according to claim 10, wherein the determining, based on slot formats of the N slots, whether to send data carried on a PUSCH in the N slots comprises:
sending, when a quantity of available symbols in an $i^{th}$ slot in the N slots is greater than or equal to a third threshold, the data in the $i^{th}$ slot, wherein a value of i is 1, 2, ..., or N.

16. The method according to any one of claims 10 to 15, wherein a value of N is indicated by the PUSCH parameters, or the value of N is determined based on a symbol quantity L1 indicated by the PUSCH parameters.

17. The method according to any one of claims 10 to 16, wherein the N slots are N consecutive slots that start from a start slot, or the N slots are N slots that start from a start slot and do not comprise a downlink slot, or the N slots are N slots that start from a start slot and do not comprise a downlink slot or a special slot, or the N slots are N uplink slots that start from a start slot, or the N slots are N slots that start from a start slot and satisfy that symbols starting from a start symbol S in each slot are all available symbols, or the N slots are N slots that start from a start slot and satisfy that L symbols starting from a start symbol S in each slot are all available symbols, or the N slots are N slots that satisfy that L symbols starting from a start symbol S in a start slot are all available symbols and symbols in other slots in the N slots are all available symbols, or the N slots are N slots that satisfy that symbols starting from a start symbol S in a start slot are all available symbols and symbols in other slots in the N slots are all available symbols, wherein the start slot is a first slot for sending the data carried on the PUSCH.

18. The method according to any one of claims 10 to 17, wherein a first slot after the N slots is a start slot for repeatedly sending the data; or a first slot in which there are available symbols after the N slots is a start slot for repeatedly sending the data; or a first slot in which a symbol quantity of comprised available symbols is greater than or equal to a fourth threshold after the N slots is a start slot for repeatedly sending the data; or a first slot in which L symbols starting from a start symbol are all available symbols after the N slots is a start slot for repeatedly sending the data.

19. The method according to any one of claims 10 to 18, wherein the available symbols are not downlink symbols or flexible symbols for downlink-to-uplink conversion.

20. The method according to any one of claims 10 to 19, wherein whether to send the data in the frequency hopping manner in each slot in the N slots is determined based on a quantity of available symbols in the slot.

21. The method according to any one of claims 10 to 20, wherein a frequency domain position corresponding to slots in a first time window in the N slots is a first frequency domain position, and a frequency domain position corresponding to slots in a second time window is a second frequency domain position.

22. A data transmission method, comprising:

determining first information based on physical uplink shared channel PUSCH parameters, wherein the first information is a first resource in a first slot or N slots, the first resource is formed by available symbols, and N is an integer greater than 1; and
determining, based on a quantity of the available symbols in the first resource, whether to receive a PUSCH in a frequency hopping manner in the first resource when the first information is the first resource in the first slot; or
determining, based on slot formats of the N slots when the first information is the N slots, whether to receive data carried on a PUSCH in the N slots, wherein the data sent in the N slots is obtained by performing channel coding on a transport block TB, and a TB size is determined based on available symbols in the N slots.

23. The method according to claim 22, wherein the first information is the first resource in the first slot.

24. The method according to claim 23, wherein the determining, based on a quantity of the available symbols in the first resource, whether to receive a PUSCH in a frequency hopping manner in the first resource comprises:

receiving the PUSCH in the frequency hopping manner in the first resource when the quantity of the available symbols in the first resource is greater than or equal to a first threshold; and
receiving the PUSCH in a non-frequency hopping manner in the first resource when the quantity of the available symbols in the first resource is less than a second threshold, wherein the second threshold is less than or equal to the first threshold.

25. The method according to claim 22, wherein the first information is the N slots.

26. The method according to claim 25, wherein the determining, based on slot formats of the N slots, whether to receive data carried on a PUSCH in the N slots comprises:
receiving the data in the N slots when a start symbol of each slot in the N slots and symbols after the start symbol of each slot are all available symbols.

27. The method according to claim 25, wherein the determining, based on slot formats of the N slots, whether to receive data carried on a PUSCH in the N slots comprises:
receiving the data in the N slots when symbols starting from a start symbol in a start slot in the N slots are all available symbols and symbols in other slots in the N slots are all available symbols.

28. A data transmission apparatus, comprising a processor, wherein
the processor is connected to a memory, the memory is configured to store computer-executable instructions, and the processor executes the computer-executable instructions stored in the memory, to enable the apparatus to implement the method according to any one of claims 1 to 21.

29. A data transmission apparatus, comprising a processor, wherein
the processor is connected to a memory, the memory is configured to store computer-executable instructions, and the processor executes the computer-executable instructions stored in the memory, to enable the apparatus to implement the method according to any one of claims 22 to 27.

30. A computer-readable storage medium, comprising computer-executable instructions, wherein when the computer-executable instructions are run on a computer, the computer is enabled to perform the method according to any one of claims 1 to 21, or perform the method according to any one of claims 22 to 27.

**31.** A computer program product, comprising computer-executable instructions, wherein when the computer-executable instructions are run on a computer, the computer is enabled to perform the method according to any one of claims 1 to 21, or perform the method according to any one of claims 22 to 27.

**32.** A data transmission system, comprising a data transmission apparatus configured to implement the method according to any one of claims 1 to 21, and a data transmission apparatus configured to implement the method according to any one of claims 22 to 27.

Slot n ◄───────────► ◄─────────── Slot n+1 ───────────►

◄─ AC0 ─► ◄─────────── AC1 ───────────►

| 0 | 1 | 2 | 3 | 4 | 5 | 6 | 7 | 8 | 9 | 10 | 11 | 12 | 13 | 0 | 1 | 2 | 3 | 4 | 5 | 6 | 7 | 8 | 9 | 10 | 11 | 12 | 13 |

◄───────────────── NR ─────────────────►

Symbol range defined by S and L

AC: actual repetition (actual repetition)
NR: nominal repetition (nominal repetition)

FIG. 1

| RB0 | RB1 | RB2 | RB3 | RB4 | RB5 | RB6 | RB7 | RB8 | RB9 |

RBG0      RBG1      RBG2      RBG3      RBG4

FIG. 2

| RB0 | RB1 | RB2 | RB3 | RB4 | RB5 | RB6 | RB7 | RB8 | RB9 |

FIG. 3

FIG. 4

EP 4 243 530 A1

FIG. 5

FIG. 6

FIG. 7

Terminal

Network device

801: Send a slot format and PUSCH parameters

802: Determine a first resource in a first slot based on the slot format and the PUSCH parameters, where the first resource is formed by available symbols

803: Determine a first resource in a first slot based on the slot format and the PUSCH parameters

804: Determine, based on a quantity of the available symbols in the first resource, whether to send the PUSCH in a frequency hopping manner in the first resource

805: Determine, based on a quantity of available symbols in the first resource, whether to receive the PUSCH in a frequency hopping manner in the first resource

FIG. 8

Slot n

0 1 2 3 4 5 6 7 8 9 10 11 12 13

S=2, and L=10

FIG. 9

FIG. 10

← Slot n → ← Slot n+1 → ← Slot n+2 → ← Slot n+3 → ← Slot n+4 → ← Slot n+5 →

Resource 0                Resource 3

← → ← Resource 1 → ← Resource 2 →     ← → ← Resource 4 → ← Resource 5 →

Start symbol 8

▨ Downlink    ▯ Downlink-to-uplink   ⊟ Available
    symbol        flexible symbol     symbol

**FIG. 11**

← Slot n → ← Slot n+1 → ← Slot n+2 → ← Slot n+3 → ← Slot n+4 → ← Slot n+5 →

Resource 0      Resource 1            Resource 2      Resource 3

← → ← →           ← → ← →

▨ Downlink    ▯ Downlink-to-uplink   ▯ Available
    symbol        flexible symbol     symbol

**FIG. 12**

| Terminal | | Network device |
|---|---|---|

1301: Send a slot format and PUSCH parameters

1302: Determine N slots based on the PUSCH parameters

1303: Determine N slots based on the PUSCH parameters

1304: Determine, based on slot formats of the N slots, whether to send data Carried on a PUSCH in the N slots, where the data sent in the N slots is obtained by performing channel coding on a TB, and a TB size is determined based on available symbols in the N slots

1305: Determine, based on slot formats of the N slots, whether to receive data carried on a PUSCH in the N slots, where the data sent in the N slots is obtained by performing channel coding on a TB, and a TB size is determined based on available symbols in the N slots

**FIG. 13**

|←— Slot n —→|←— Slot n+1 —→|←— Slot n+2 —→|←— Slot n+3 —→|←— Slot n+4 —→|←— Slot n+5 —→|

|←——— First data sending ———→|←— First data retransmission —→|←Second data retransmission→|

▨ Available symbol          ⣿ Unavailable symbol

(a)

|←— Slot n —→|←— Slot n+1 —→|←— Slot n+2 —→|←— Slot n+3 —→|←— Slot n+4 —→|←— Slot n+5 —→|

|←——— First data sending ———→|          |←— First data retransmission —→|

▨ Available symbol          ⣿ Unavailable symbol

(b)

FIG. 14

| Terminal |                    | Network device |

1501: Determine N slots, where the N slots are for sending a PUSCH or for repeatedly sending the PUSCH

1502: Determine N slots

1503: PUSCH →

FIG. 15

Processing unit 1601

Storage unit 1603

Communication unit 1602

Data transmission apparatus 160

FIG. 16

Processor
1701

Memory 1702

Transceiver
1703

FIG. 17

Input interface
and/or output
interface

Logic circuit

Processor 1701

Memory 1702

FIG. 18

## INTERNATIONAL SEARCH REPORT

| International application No. |
| --- |
| **PCT/CN2021/134624** |

**A.    CLASSIFICATION OF SUBJECT MATTER**

H04W 72/04(2009.01)i;  H04B 1/7136(2011.01)i

According to International Patent Classification (IPC) or to both national classification and IPC

**B.    FIELDS SEARCHED**

Minimum documentation searched (classification system followed by classification symbols)

H04W,H04B,H04L

Documentation searched other than minimum documentation to the extent that such documents are included in the fields searched

Electronic data base consulted during the international search (name of data base and, where practicable, search terms used)

CNABS, CNTXT, CNKI, ENTXT, VEN, 3GPP: 时隙, 物理上行共享信道, 跳频, 符号, 个数, 可用, 不发送, 不跳频, 资源块, time slot, PUSCH, frequency hops, symbols, number, available, not, transmi+, TB

**C.    DOCUMENTS CONSIDERED TO BE RELEVANT**

| Category* | Citation of document, with indication, where appropriate, of the relevant passages | Relevant to claim No. |
| --- | --- | --- |
| X | CN 111316589 A (LG ELECTRONICS INC.) 19 June 2020 (2020-06-19)<br>Claims 1-6 | 1, 10-19, 22, 25-32 |
| Y | CN 111316589 A (LG ELECTRONICS INC.) 19 June 2020 (2020-06-19)<br>Claims 1-6 | 1-9, 20-24, 28-32 |
| Y | CN 109818647 A (BEIJING SPREADTRUM HIGH-TECH COMMUNICATIONS TECHNOLOGY CO., LTD.) 28 May 2019 (2019-05-28)<br>claim 1, description paragraphs [0002]-[0014] | 1-9, 20-24, 28-32 |
| A | US 2018279296 A1 (QUALCOMM INC.) 27 September 2018 (2018-09-27)<br>entire document | 1-32 |
| A | CN 107197528 A (HUAWEI TECHNOLOGIES CO., LTD.) 22 September 2017 (2017-09-22)<br>entire document | 1-32 |
| A | US 2020266944 A1 (NTT DOCOMO, INC.) 20 August 2020 (2020-08-20)<br>entire document | 1-32 |

☐ Further documents are listed in the continuation of Box C.      ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **10 February 2022** | **16 February 2022** |

| Name and mailing address of the ISA/CN | Authorized officer |
| --- | --- |
| **China National Intellectual Property Administration (ISA/ CN)**<br>**No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**
Information on patent family members

| International application No. |
| --- |
| **PCT/CN2021/134624** |

| Patent document cited in search report | | | Publication date (day/month/year) | Patent family member(s) | | | Publication date (day/month/year) |
| --- | --- | --- | --- | --- | --- | --- | --- |
| CN | 111316589 | A | 19 June 2020 | WO | 2019088787 | A1 | 09 May 2019 |
| | | | | JP | 2020533895 | A | 19 November 2020 |
| | | | | EP | 3661103 | A1 | 03 June 2020 |
| | | | | EP | 3661103 | A4 | 29 July 2020 |
| | | | | KR | 20200084858 | A | 13 July 2020 |
| | | | | KR | 20190050728 | A | 13 May 2019 |
| | | | | KR | 20190114946 | A | 10 October 2019 |
| | | | | KR | 102133003 | B1 | 13 July 2020 |
| | | | | US | 2019141698 | A1 | 09 May 2019 |
| | | | | US | 10887872 | B2 | 05 January 2021 |
| CN | 109818647 | A | 28 May 2019 | None | | | |
| US | 2018279296 | A1 | 27 September 2018 | KR | 20190127902 | A | 13 November 2019 |
| | | | | CN | 110431793 | A | 08 November 2019 |
| | | | | EP | 3602907 | A1 | 05 February 2020 |
| | | | | US | 10405305 | B2 | 03 September 2019 |
| | | | | BR | 112019019817 | A2 | 22 April 2020 |
| | | | | WO | 2018175011 | A1 | 27 September 2018 |
| | | | | TW | 201836422 | A | 01 October 2018 |
| | | | | SG | 11201907508 W | A | 30 October 2019 |
| | | | | JP | 2020511847 | A | 16 April 2020 |
| CN | 107197528 | A | 22 September 2017 | US | 2019013903 | A1 | 10 January 2019 |
| | | | | US | 10819474 | B2 | 27 October 2020 |
| | | | | EP | 3419370 | A1 | 26 December 2018 |
| | | | | EP | 3419370 | A4 | 30 January 2019 |
| | | | | JP | 2019513321 | A | 23 May 2019 |
| | | | | JP | 6666462 | B2 | 13 March 2020 |
| | | | | WO | 2017157181 | A1 | 21 September 2017 |
| US | 2020266944 | A1 | 20 August 2020 | JP | 2020535763 | A | 03 December 2020 |
| | | | | WO | 2019067818 | A1 | 04 April 2019 |

**EP 4 243 530 A1**

**REFERENCES CITED IN THE DESCRIPTION**

**Patent documents cited in the description**

- CN 202011395788
- CN 202110055474